# EUROPEAN PATENT SPECIFICATION

(11) **EP 1 498 432 B1**
(45) Date of publication and mention of the grant of the patent: **02.09.2009**
(21) Application number: 03725615.3
(22) Date of filing: 21.04.2003
(51) Int. Cl.: C08F 4/645, C08L 23/10, C09J 123/10, C08F 10/06

(54) **PROCESS FOR PRODUCING HIGHLY FLOWABLE PROPYLENE POLYMER AND HIGHLY FLOWABLE PROPYLENE POLYMER**
VERFAHREN ZUR HERSTELLUNG VON GUT FLIESSFÄHIGEM PROPYLENPOLYMER UND GUT FLIESSFÄHIGES PROPYLENPOLYMER
POLYPROPYLENE A GRANDE APTITUDE A L'ECOULEMENT ET PROCEDE DE FABRICATION

(30) Priority: 23.04.2002 JP 2002120192
(43) Date of publication of application: 19.01.2005
(73) Proprietor: IDEMITSU KOSAN COMPANY LIMITED, Tokyo 100-0005 (JP)
(72) Inventor: MINAMI, Yutaka, Ichihara-shi, Chiba 299-0107 (JP); KANAMARU, Masami, Ichihara-shi, Chiba 299-0107 (JP); FUJIOKA, Toyozo, Tokuyama-shi, Yamaguchi 745-0843 (JP); MINE, Toshihiro, Tokuyama-shi, Yamaguchi 745-0843 (JP)
(74) Representative: Gille Hrabal Struck Neidlein Prop Roos
(86) International application number: PCT/JP2003/005042
(87) International publication number: WO 2003/091289

(56) References cited:
- EP-A- 1 095 951
- WO-A-01/25300
- WO-A-01/70878
- WO-A-01/96490
- JP-A- 2001 064 322
- JP-A- 2001 191 463

## Description

### Technical Field

The present invention relates to a process for producing a highly flowable propylene-based polymer.

The propylene-based polymer that is produced by the production method of the present invention is suitably used in various applications such as hot-melt adhesives, sealing agents, modifiers for resins and elastomers, wax blending agents and filler blending agents.

### Background Art

Hitherto, as polymers that have relatively low molecular weight and crystallinity and are usable as hot-melt adhesives, etc., there are known propylene homopolymers or olefin-based polymers produced by copolymerizing a propylene-based compound with ethylene or propylene.

However, these polymers tend to be deteriorated in uniformity due to broad molecular weight distribution and broad composition distribution thereof.

In addition, there are also known non-crystalline poly-α-olefins. However, the non-crystalline poly-α-olefins tend to have broad molecular weight distribution and composition distribution and be ill-balanced between flowability, physical property (elastic modulus) and fabricability (melting point).

Meanwhile, conventionally, propylene polymers have been produced using magnesium-supported titanium catalysts (Japanese Patent Application Laid-Open No. Hei 7-145205). However, the thus produced propylene polymers have a non-uniform composition which gives adverse influences on properties thereof such as occurrence of stickiness and poor transparency.

In this regard, in recent years, propylene polymers having a uniform composition and a relatively low molecular weight have been produced using metallocene catalysts.

For example, WO 01/96490 discloses resins for polyolefin-based hot-melt adhesives which are made of propylene-based polymers produced in the presence of the metallocene catalysts.

Specifically, as the polymerization catalysts for production of the propylene-based polymers, there are disclosed polymerization catalysts composed of a transition metal compound used as the component (A) in the present invention and a co-catalyst selected from the group consisting of a compound capable of forming an ionic complex by reacting with the component (A), and aluminoxane.

In the above prior publication, only the aluminoxane has been concretely used in Examples thereof, and the propylene-based polymers produced have a uniform composition and a relatively low molecular weight. However, the polymerization activity of the catalyst used therein is not necessarily high.

Further, in the above catalyst system, since the influence of hydrogen on the molecular weight is not large and the catalytic activity thereof under a high polymerization temperature condition is not necessarily high, it will be difficult to sufficiently reduce the molecular weight of the propylene-based polymers.

More specifically, the propylene homopolymers specifically disclosed in the prior publication have an intrinsic viscosity [η] as high as about 0.5 dL/g.

Also, hot-melt adhesives used in hot-melt bonding methods in which high-molecular compounds are heat-melted for bonding, have been extensively employed in various applications because they are excellent in high-speed coatability, rapid curability, solvent-free applicability, barrier property, energy-saving property, inexpensiveness, etc.

The conventional hot-melt adhesives are mainly composed of resins prepared by blending a tackifier resin or a plasticizer in a base polymer such as natural rubbers, ethylene-vinyl acetate copolymers, styrene-butadiene-styrene block copolymers and styrene-isoprene-styrene block copolymers.

However, since the above base polymers contain a large amount of double bonds, the resins for hot-melt adhesives which are formulated using such base polymers, exhibit a poor thermal stability upon heating and, therefore, suffer from oxidation, gelation, decomposition and discoloration upon coating. In addition, there occurs such a problem that portions bonded by the hot-melt adhesives tend to be deteriorated in strength with time.

Further, the hot-melt adhesives are also deteriorated in adhesion to low-polar substances such as polyethylene and polypropylene.

To solve the deteriorated adhesion to low-polar substances, there have been conventionally used hot-melt adhesive resins containing polypropylene as a base polymer. These resins show a good thermal stability, but are deteriorated in flowability due to a too high hardness of the base polymer contained therein. As a result, the hot-melt adhesive resins must be applied under a high temperature condition, so that there occurs such a problem that the thermal stability of the resins becomes lowered under such a high-temperature condition and, therefore, a sufficient adhesion strength cannot be attained.

In order to solve the above problems and defects of the conventional hot-melt adhesive resins, the present inventors have proposed, in Japanese Patent Application No. 2000-178420, polyolefin-based hot-melt adhesive resins that are excellent in thermal stability and flowability under a high-temperature condition, adhesion to low-polar substances, and heat resistance at a bonded surface formed thereby.

However, it has been further demanded to develop propylene-based polymers having a still higher flowability as well as a process for production thereof which can be performed with a high activity, especially a high sensitivity to hydrogen.

The present invention has been made to solve the above conventional problems. An object of the present invention is to provide a process for efficiently producing a highly flowable crystalline propylene-based polymer having a uniform composition and a well-controlled stereoregularity.

### Disclosure of the Invention

As a result of extensive researches for accomplishing the above object, the inventors have found that the propylene-based polymers can be produced at a considerably high activity in the presence of a polymerization catalyst composed of (A) a specific transition metal compound and (B) an organoboron compound, as compared to the case where aluminoxane is used as the component (B), and the resultant propylene-based polymers can exhibit suitable molecular weight distribution and composition distribution as well as a well-controlled balance between flowability, physical property (elastic modulus) and fabricability (melting point).

In addition, the inventors have found that the above propylene-based polymers can provide a hot-melt adhesive composition which is reduced in amount of a viscosity modifier blended, and is excellent in balance between flowability and adhesion property, and adhesion to low-polar substances.

The present invention has been accomplished based on the above findings.

Thus, the present invention provides a process for producing a propylene-based polymer.
1. A process for producing a highly flowable propylene-based polymer, comprising:
   polymerizing propylene in the presence of a polymerization catalyst comprising:
      (A) a transition metal compound containing double crosslinking type biscyclopentadienyl derivatives represented by the following general formula (II) 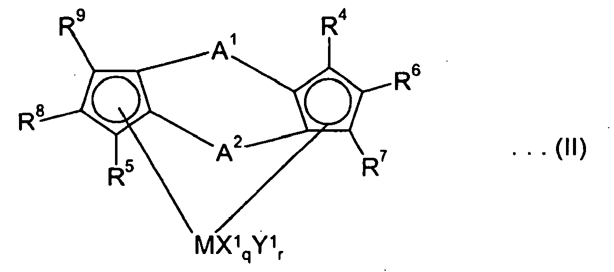 wherein M is a metal element belonging to Groups 3 to 10 or lanthanoid of the Period Table;
         A¹ and A² are divalent cross-linking groups capable of bonding the two ligands to each other which are the same or different from each other, and are independently a C₁ to C₂₀ hydrocarbon group, a C₁ to C₂₀ halogen-containing hydrocarbon group or a silicon-containing group;
         R⁴ to R⁹ are independently a hydrogen atom, a halogen atom, a C₁ to C₂₀ hydrocarbon group, a C₁ to C₂₀ halogen-containing hydrocarbon group, a silicon-containing group or a hetero atom-containing group and at least one of R⁴ to R⁹ is a group other than a hydrogen atom and R⁴ to R⁹ are the same or different from each other, and adjacent two groups thereof are optionally bonded to each other to form a ring;
         X¹ is a ligand capable of forming a σ-bond wherein when a plurality of X¹ groups are present, these X¹ groups may be same or different from each other, and may be cross-linked with the other X¹ group or Y¹ group;
         Y¹ is a Lewis base and when a plurality of Y¹ groups are present, these Y¹ groups are the same or different from each other, and are optionally cross-linked with the other Y¹ group or X¹ group;
         q is an integer of 1 to 5 calculated from the formula:
            [(valence of M)-2]; and
         r is an integer of 0 to 3, and
      (B) an organoboron compound;
   wherein the propylene-based polymer has an intrinsic viscosity of 0.01 to 0.4 dl/g as measured in a tetralin solvent at 135°C.
2. The process according to the above aspect 1, wherein the propylene-based polymer has an intrinsic viscosity of 0.1 to 0.4 dl/g as measured in a tetralin solvent at 135°C.
3. A process for producing a highly flowable propylene-based polymer, comprising:
   copolymerizing propylene with ethylene and/or a C₄ to C₂₀ α-olefin in the presence of a polymerization catalyst comprising:
      (A) a transition metal compound containing double crosslinking type biscyclopentadienyl derivatives represented by the following general formula (II) 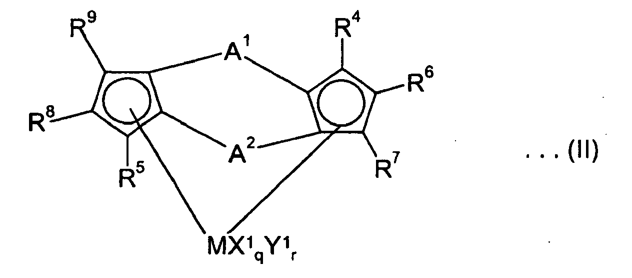 wherein M is a metal element belonging to Groups 3 to 10 or lanthanoid of the Period Table;
         A¹ and A² are divalent cross-linking groups capable of bonding the two ligands to each other which are the same or different from each other, and are independently a C₁ to C₂₀ hydrocarbon group, a C₁ to C₂₀ halogen-containing hydrocarbon group or a silicon-containing group;
         R⁴ to R⁹ are independently a hydrogen atom, a halogen atom, a C₁ to C₂₀ hydrocarbon group, a C₁ to C₂₀ halogen-containing hydrocarbon group, a silicon-containing group or a hetero atom-containing group and at least one of R⁴ to R⁹ is a group other than a hydrogen atom and R⁴ to R⁹ are the same or different from each other, and adjacent two groups thereof are optionally bonded to each other to form a ring;
         X¹ is a ligand capable of forming a σ-bond wherein when a plurality of X¹ groups are present, these X¹ groups may be same or different from each other, and may be cross-linked with the other X¹ group or Y¹ group;
         Y¹ is a Lewis base and when a plurality of Y¹ groups are present, these Y¹ groups are the same or different from each other, and are optionally cross-linked with the other Y¹ group or X¹ group;
         q is an integer of 1 to 5 calculated from the formula:
            [(valence of M) - 2] ; and
         r is an integer of 0 to 3, and
      (B) an organoboron compound;
   wherein the propylene-based polymer has an intrinsic viscosity of 0.01 to 0.4 dl/g as measured in a tetralin solvent at 135°C.
4. The process according to the above aspect 3, wherein the propylene-based polymer has an intrinsic viscosity of 0.1 to 0.4 dl/g as measured in a tetralin solvent at 135°C.
5. The process for preparing a propylene-based polymer according to any of the above aspects 1 to 4, wherein R⁴ and R⁵ are groups containing a hetero atom selected from the group consisting of oxygen, halogen and silicon.

### Best Mode for Carrying Out the Invention

In the following descriptions, [1] the process for producing the propylene-based polymer, [2] the propylene-based polymer, [3] the propylene-based modifier and [4] the hot-melt adhesive composition are explained in detail.

### [1] Process for Production of Propylene-Based Polymer

In the process for production of the propylene-based polymer according to the present invention, the propylene-based polymer is produced by (a) homopolymerizing propylene, or (a') copolymerizing propylene with ethylene and/or a C₄ to C₂₀ α-olefin, in the presence of a polymerization catalyst comprising:

### (A) a transition metal compound represented by the following general formula (II):

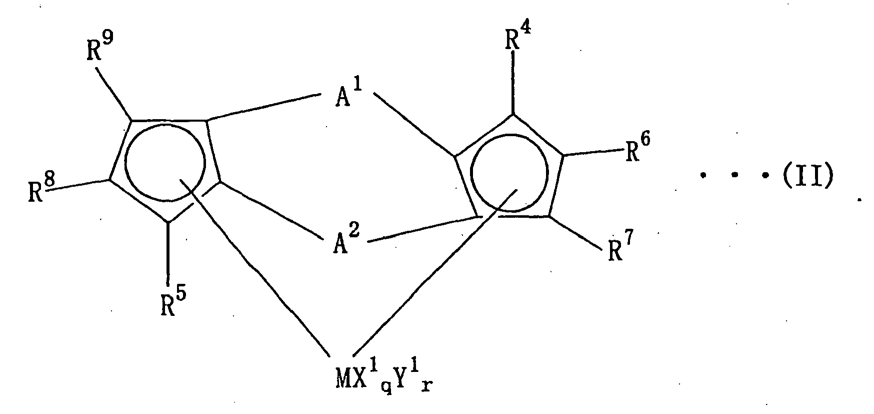

wherein M is a metal element belonging to Groups 3 to 10 or lanthanoid of the Period Table; R⁴ to R⁹ are defined above;
X¹ is a ligand capable of forming a σ-bond with the proviso that when a plurality of X groups are present, these X¹ groups may be same or different from each other, and may be cross-linked with the other X¹ group, or Y¹,
Y¹ is a Lewis base with the proviso that when a plurality of Y¹ groups are present, these Y¹ groups may be same or different from each other, and may be cross-linked with the other Y¹ group, or X¹;
A¹ and A² are divalent cross-linking groups capable of bonding the two ligands E¹ and E² to each other which may be same or different from each other, and are independently a C₁ to C₂₀ hydrocarbon group, a C₁ to C₂₀ halogen-containing hydrocarbon group or a silicon-containing group;
q is an integer of 1 to 5 given by the formula:
   [(valence of M) - 2]; and
r is an integer of 0 to 3, and

### (B) an organoboron compound.

In the above general formula (II), M represents a metal element belonging to Groups 3 to 10 or lanthanoid of the Period Table. Specific examples of the metal element M include titanium, zirconium, hafnium, yttrium, vanadium, chromium, manganese, nickel, cobalt, palladium and lanthanoid metals. Of these metal elements, preferred are titanium, zirconium and hafnium from the standpoint of a good catalytic activity for polymerization of olefins.

X¹ represents a ligand capable of forming a σ-bond. When a plurality of X¹ groups are present, these X groups may be same or different from each other, and may be respectively cross-linked with the other X¹group, or Y¹.

Specific examples of the ligand X¹ include a halogen atom, a C₁ to C₂₀ hydrocarbon group, C₁ to C₂₀ alkoxy, C₆ to C₂₀ aryloxy, a C₁ to C₂₀ amide group, a C₁ to C₂₀ silicon-containing group, a C₁ to C₂₀ phosphide group, a C₁ to C₂₀ sulfide group and C₁ to C₂₀ acyl.

Y¹ represents a Lewis base. When a plurality of Y groups are present, these Y¹ groups may be same or different from each other, and may be respectively cross-linked with the other Y¹ group, or X¹.

Specific examples of the Lewis base as Y¹ include amines, ethers, phosphines and thioethers.

A¹ and A² are divalent cross-linking groups capable of bonding the two ligands to each other which may be same or different from each other, and are independently represent a C₁ to C₂₀ hydrocarbon group, a C₁ to C₂₀ halogen-containing hydrocarbon group or a silicon-containing group.

The cross-linking groups include, for example, groups represented by the following general formula: 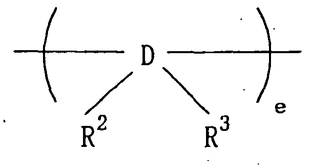 wherein D is carbon, silicon or tin; R² and R³ are independently a hydrogen atom or a C₁ to C₂₀ hydrocarbon group, and may be same or different from each other and may be bonded to each other to form a ring; and e is an integer of 1 to 4. Specific examples of the cross-linking groups represented by the above formula include methylene, ethylene, ethylidene, propylidene, isopropylidene, cyclohexylidene, 1,2-cyclohexylene, vinylidene (CH₂=C=), dimethylsilylene, diphenylsilylene, methylphenylsilylene, dimethylgermylene, dimethylstannylene, tetramethyldisilylene and diphenyldisilylene.

Of these cross-linking groups, preferred are ethylene, isopropylidene and dimethylsilylene.

The symbol q is an integer of 1 to 5 given by the formula:
[(valence of M) - 2], and r is an integer of 0 to 3.

R⁴ to R⁹ are independently a hydrogen atom, a halogen atom, a C₁ to C₂₀ hydrocarbon group, a C₁ to C₂₀ halogen containing hydrocarbon group, a silicon-containing group or a hetero atom-containing group. However, at least one of R⁴ to R⁹ should be a group other than a hydrogen atom.

Also, R⁴ to R⁹ may be same or different from each other, and adjacent two groups thereof may be bonded to each other to form a ring.

In particular, R⁶ and R⁷ as well as R⁸ and R⁹ are preferably bonded to each other to form a ring.

R⁴ and R⁵ are preferably groups containing a hetero atom such as oxygen, halogen and silicon, because these groups exhibit a high polymerization activity.

The transition metal compound containing double crosslinking type biscyclopentadienyl derivatives as ligands preferably contains silicon in the crosslinking group between the ligands.

Specific examples of the transition metal compounds represented by the general formula (II) include (1,2'-ethylene)(2,1'-ethylene) bis(indenyl)zirconium dichloride, (1,2'-methylene)(2,1'-methylene) bis(indenyl)zirconium dichloride, (1,2'-isopropylidene)(2,1'-isopropylidene) bis(indenyl)zirconium dichloride, (1,2'-ethylene)(2,1'-ethylene) bis(3-methylindenyl)zirconium dichloride, (1,2'-ethylene)(2,1'-ethylene) bis(4,5-benzoindenyl)zirconium dichloride, (1,2'-ethylene)(2,1'-ethylene) bis(4-isopropylindenyl)zirconium dichloride, (1,2'-ethylene)(2,1'-ethylene) bis(5,6-dimethylindenyl)zirconium dichloride, (1,2'-ethylene)(2,1'-ethylene) bis(4,'7-diisopropylindenyl)zirconium dichloride, (1,2'-ethylene)(2,1'-ethylene) bis(4-phenylindenyl)zirconium dichloride, (1,2'-ethylene)(2,1'-ethylene) bis(3-methyl-4-isopropylindenyl)zirconium dichloride, (1,2'-ethylene)(2,1'-ethylene) bis(5,6-benzoindenyl)zirconium dichloride, (1,2'-ethylene)(2,1'-isopropylidene) bis(indenyl)zirconium dichloride, (1,2'-methylene)(2,1'-ethylene) bis(indenyl)zirconium dichloride, (1,2'-methylene)(2,1'-isopropylidene) bis(indenyl)zirconium dichloride, (1,2'-dimethylsilylene)(2,1'-dimethylsilylene) bis(indenyl)zirconium dichloride, (1,2'-dimethylsilylene)(2,1'-dimethylsilylene) bis(3-methylindenyl)zirconium dichloride, (1,2'-dimethylsilylene)(2,1'-dimethylsilylene) bis(3-n-butylindenyl)zirconium dichloride, (1,2'-dimethylsilylene)(2,1'-dimethylsilylene) bis(3-i-propylindenyl)zirconium dichloride, (1,2'-dimethylsilylene)(2,1'-dimethylsilylene) bis(3-trimethylsilylmethylindenyl)zirconium dichloride, (1,2'-dimethylsilylene)(2,1'-dimethylsilylene) bis(3-phenylindenyl)zirconium dichloride, (1,2'-dimethylsilylene)(2,1'-dimethylsilylene) bis(4,5-benzoindenyl)zirconium dichloride, (1,2'-dimethylsilylene)(2,1'-dimethylsilylene) bis(4-isopropylindenyl)zirconium dichloride, (1,2'-dimethylsilylene)(2,1'-dimethylsilylene) bis(5,6-dimethylindenyl)zirconium dichloride, (1,2'-dimethylsilylene)(2,1'-dimethylsilylene) bis(4,7-di-i-propylindenyl)zirconium dichloride, (1,2'-dimethylsilylene)(2,1'-dimethylsilylene) bis(4-phenylindenyl)zirconium dichloride, (1,2'-dimethylsilylene)(2,1'-dimethylsilylene) bis(3-methyl-4-i-propylindenyl)zirconium dichloride, (1,2'-dimethylsilylene)(2,1'-dimethylsilylene) bis(5,6-benzoindenyl)zirconium dichloride, (1,2'-dimethylsilylene)(2,1'-isopropylidene) bis(indenyl)zirconium dichloride, (1,2'-dimethylsilylene)(2,1'-isopropylidene) bis(3-methylindenyl)zirconium dichloride, (1,2'-dimethylsilylene)(2,1'-isopropylidene) bis(3-i-propylindenyl)zirconium dichloride, (1,2'-dimethylsilylene)(2,1'-isopropylidene) bis(3-n-butylindenyl)zirconium dichloride, (1,2'-dimethylsilylene)(2,1'-isopropylidene) bis(3-trimethylsilylmethylindenyl)zirconium dichloride, (1,2'-dimethylsilylene)(2,1'-isopropylidene) bis(3-trimethylsilylindenyl)zirconium dichloride, (1,2'-dimethylsilylene)(2,1'-isopropylidene) bis(3-phenylindenyl)zirconium dichloride, (1,2'-dimethylsilylene)(2,1'-methylene) bis(indenyl)zirconium dichloride, (1,2'-dimethylsilylene)(2,1'-methylene) bis(3-methylindenyl) zirconium dichloride, (1,2'-dimethylsilylene)(2,1'-methylene) bis(3-i-propylindenyl)zirconium dichloride, (1,2'-dimethylsilylene)(2,1'-methylene) bis(3-n-butylindenyl)zirconium dichloride, (1,2'-dimethylsilylene)(2,1'-methylene) bis(3-trimethylsilylmethylindenyl)zirconium dichloride, (1,2'-dimethylsilylene)(2,1'-methylene) bis(3-trimethylsilylindenyl)zirconium dichloride, (1,2'-diphenylsilylene)(2,1'-methylene) bis(indenyl)zirconium dichloride, (1,2'-diphenylsilylene)(2,1'-methylene) bis(3-methylindenyl)zirconium dichloride, (1,2'-diphenylsilylene)(2,1'-methylene) bis(3-i-propylindenyl)zirconium dichloride, (1,2'-diphenylsilylene)(2,1'-methylene) bis(3-n-butylindenyl)zirconium dichloride, (1,2'-diphenylsilylene)(2,1'-methylene) bis(3-trimethylsilylmethylindenyl)zirconium dichloride, (1,2'-diphenylsilylene)(2,1'-methylene) bis(3-trimethylsilylindenyl)zirconium dichloride, (1,2'-dimethylsilylene)(2,1'-dimethylsilylene)(3-methylcyclopentadienyl) (3'-methylcyclopentadienyl)zirconium dichloride, (1,2'-dimethylsilylene)(2,1'-isopropylidene)(3-methylcyclopentadienyl) (3'-methylcyclopentadienyl)zirconium dichloride, (1,2'-dimethylsilylene)(2,1'-ethylene)(3-methylcyclopentadienyl) (3'-methylcyclopentadienyl)zirconium dichloride, (1,2'-ethylene)(2,1'-methylene)(3-methylcyclopentadienyl) (3'-methylcyclopentadienyl)zirconium dichloride, (1,2'-ethylene)(2,1'-isopropylidene)(3-methylcyclopentadienyl) (3'-methylcyclopentadienyl)zirconium dichloride, (1,2'-methylene)(2,1'-methylene)(3-methylcyclopentadienyl) (3'-methylcyclopentadienyl)zirconium dichloride, (1,2'-methylene)(2,1'-isopropylidene)(3-methylcyclopentadienyl) (3'-methylcyclopentadienyl)zirconium dichloride, (1,2'-isopropylidene)(2,1'-isopropylidene)(3-methylcyclopentadienyl) (3'-methylcyclopentadienyl)zirconium dichloride, (1,2'-dimethylsilylene)(2,1'-dimethylsilylene)(3,4-dimethylcyclopentadienyl) (3',4'-dimethylcyclopentadienyl)zirconium dichloride, (1,2'-dimethylsilylene)(2,1'-isopropylidene)(3,4-dimethylcyclopentadienyl) (3',4'-dimethylcyclopentadienyl)zirconium dichloride, (1,2'-dimethylsilylene)(2,1'-ethylene)(3,4'-dimethylcyclopentadienyl) (3',4'-dimethylcyclopentadienyl)zirconium dichloride, (1,2'-ethylene)(2,1'-methylene)(3,4-dimethylcyclopentadienyl) (3',4'-dimethylcyclopentadienyl)zirconium dichloride, (1,2'-ethylene)(2,1'-isopropylidene)(3,4-dimethylcyclopentadienyl) (3',4'-dimethylcyclopentadienyl)zirconium dichloride, (1,2'-mehylene)(2,1'-methylene)(3,4-dimethylcyclopentadienyl) (3',4'-dimethylcyclopentadienyl)zirconium dichloride, (1,2'-methylene)(2,1'-isopropylidene)(3,4-dimethylcyclopentadienyl) (3',4'-dimethylcyclopentadienyl)zirconium dichloride, (1,2'-isopropylidene)(2,1'-isopropylidene)(3,4-dimethylcyclopentadienyl) (3',4'-dimethylcyclopentadienyl)zirconium dichloride, (1,2'-dimethylsilylene)(2,1'-dimethylsilylene)(3-methyl-5-ethylcyclopentadienyl) (3'-methyl-5'-ethylcyclopentadienyl)zirconium dichloride, (1,2'-dimethylsilylene)(2,1'-dimethylsilylene)(3-methyl-5-ethylcyclopentadienyl) (3'-methyl-5'-ethylcyclopentadienyl)zirconium dichloride, (1,2'-dimethylsilylene)(2,1'-dimethylsilylene)(3-methyl-5-isopropylcyclopentadi enyl) (3'-methyl-5'-isopropylcyclopentadienyl)zirconium dichloride, (1,2'-dimethylsilylene)(2,1'-dimethylsilylene)(3-methyl-5-n-butylcyclopentadien yl) (3'-methyl-5'-n-butylcyclopentadienyl)zirconium dichloride, (1,2'-dimethylsilylene)(2,1'-dimethylsilylene)(3-methyl-5-phenylcyclopentadien yl) (3'-methyl-5'-phenylcyclopentadienyl)zirconium dichloride, (1,2-dimethylsilylene)(2,1'-isopropylidene) (3-methyl-5-ethylcyclopentadienyl) (3'-methyl-5'-ethylcyclopentadienyl)zirconium dichloride, (1,2'-dimethylsilylene)(2,1'-isopropylidene)(3-methyl-5-i-propylcyclopentadienyl ) (3'-methyl-5'-i-propylcyclopentadienyl)zirconium dichloride, (1,2'-dimethylsilylene)(2,1'-isopropylidene)(3methyl-5-n-butylcyclopentadienyl ) (3'-methyl-5'-n-butylcyclopentadienyl)zirconium dichloride, (1,2'-dimethylsilylene)(2,1'-isopropylidene)(3-methyl-5-phenylcyclopentadienyl) (3'-methyl-5'-phenylcyclopentadienyl)zirconium dichloride, (1,2'-dimethylsilylene)(2,1'-ethylene)(3-methyl-5-ethylcyclopentadienyl) (3'-methyl-5'-ethylcyclopentadienyl)zirconium dichloride, (1,2'-dimethylsilylene)(2,1'-ethylene)(3-methyl-5-i-propylcyclopentadienyl) (3'-methyl-5'-i-propylcyclopentadienyl)zirconium dichloride, (1,2'-dimethylsilylene)(2,1'-ethylene)(3-methyl-5-n-butylcyclopentadienyl) (3'-methyl-5'-n-butylcyclopentadienyl)zirconium dichloride, (1,2'-dimethylsilylene)(2,1'-ethylene)(3-methyl-5-phenylcyclopentadienyl) (3'-methyl-5'-phenylcyclopentadienyl)zirconium dichloride, (1,2'-dimethylsilylene)(2,1'-methylene)(3-methyl-5-ethylcyclopentadienyl) (3'-methyl-5'-ethylcyclopentadienyl)zirconium dichloride, (1,2'-dimethylsilylene)(2,1'-methylene)(3-methyl-5-i-propylcyclopentadienyl) (3'-methyl-5'-i-propylcyclopentadienyl)zirconium dichloride, (1,2'-dimethylsilylene)(2,1'-methylene)(3-methyl-5-n-butylcyclopentadienyl) (3'-methyl-5'-n-butylcyclopentadienyl)zirconium dichloride, (1,2'-dimethylsilylene)(2,1'-methylene) (3-methyl-5-phenylcyclopentadienyl) (3'-methyl-5'-phenylcyclopentadienyl)zirconium dichloride, (1,2'-ethylene)(2,1'-methylene)(3-methyl-5-i-propylcyclopentadienyl) (3'-methyl-5'-i-propylcyclopentadienyl)zirconium dichloride, (1,2'-ethylene)(2,1'-isopropylidene)(3-methyl-5-i-propylcyclopentadienyl) (3'-methyl-5'-i-propylcyclopentadienyl)zirconium dichloride, (1,2'-methylene)(2,1'-methylene)(3-methyl-5-i-propylcyclopentadienyl) (3'-methyl-5'-i-propylcyclopentadienyl)zirconium dichloride, (1,2'-methylene)(2,1'-isopropylidene)(3-methyl-5-i-propylcyclopentadienyl) (3'-methyl-5'-i-propylcyclopentadienyl)zirconium dichloride, (1,2'-diphenylsilylene) (2,1'-dimethylsilylene) bis(indenyl) zirconium dichloride, (1,2'-diisopropylsilylene) (2,1'-dimethylsilylene) bis(indenyl) zirconium dichloride, (1,2'-diisopropylsilylene) (2,1'-diisopropylsilylene) bis(indenyl) zirconium dichloride, (1,2'-dimethylsilylene) (2,1'-dimethylsilylene) (indenyl)(3-trimethylsilylindenyl) zirconium dichloride, (1,2'-diphenylsilylene) (2,1'-diphenylsilylene) (indenyl)(3-trimethylsilylindenyl) zirconium dichloride, (1,2'-diphenylsilylene) (2,1'-dimethylsilylene) (indenyl)(3-trimethylsilylindenyl) zirconium dichloride, (1,2'-dimethylsilylene) (2,1'-diphenylsilylene) (indenyl)(3-trimethylsilylindenyl) zirconium dichloride, (1,2'-diisopropylsilylene) (2,1'-dimethylsilylene) (indenyl)(3-trimethylsilylindenyl) zirconium dichloride, (1,2'-dimethylsilylene) (2,1'-diisopropylsilylene) (indenyl)(3-trimethylsilylindenyl) zirconium dichloride, (1,2'-diisopropylsilylene) (2,1'-diisopropylsilylene) (indenyl)(3-trimethylsilylindenyl) zirconium dichloride, (1,2'-dimethylsilylene) (2,1'-dimethylsilylene) (indenyl)(3-trimethylsilylmethylindenyl) zirconium dichloride, (1,2'-diphenylsilylene) (2,1'-diphenylsilylene) (indenyl)(3-trimethylsilylmethylindenyl) zirconium dichloride, (1,2'-diphenylsilylene) (2,1'-dimethylsilylene) (indenyl)(3-trimethylsilylmethylindenyl) zirconium dichloride, (1,2'-dimethylsilylene) (2,1'-diphenylsilylene) (indenyl)(3-trimethylsilylmethylindenyl) zirconium dichloride, (1,2'-diisopropylsilylene) (2,1'-dimethylsilylene) (indenyl)(3-trimethylsilylmethylindenyl) zirconium dichloride, (1,2'-dimethylsilylene) (2,1'-diisopropylsilylene) (indenyl)(3-trimethylsilylmethylindenyl) zirconium dichloride and (1,2'-diisopropylsilylene) (2,1'-diisopropylsilylene) (indenyl)(3-trimethylsilylmethylindenyl) zirconium dichloride, as well as compounds obtained by replacing zirconium of the above-described compounds with titanium or hafnium, though are not limited thereto.

In addition, similar compounds containing metal elements belonging to the other Groups or lanthanoid series may also be used in the present invention.

Also, in the above-described compounds, the (1,2'-) (2.1'-) substituted compounds may be replaced with (1,1'-) (2.2'-) substituted compounds, and preferably with the (1,2'-) (2.1'-) substituted compounds.

Suitable organoboron compounds usable as the component (B) include coordination complex compounds composed of an anion and a cation containing a plurality of groups bonded to the metal element, or Lewis acids.

As the coordination complex compounds composed of an anion and a cation containing a plurality of groups bonded to the metal element, there may be used various compounds. Examples of the coordination complex compounds suitably used in the present invention include those compounds represented by the following general formulae (III) and (IV):

([L¹ - H]^{s+})ₜ([M²Z²Z³...Zⁿ]^{(n-m)-})₁ (III)

([L²]^{s+})ₜ([M³Z²Z³...Zⁿ]^{(n-m)-})₁ (IV)

wherein L² represents M⁴, R¹⁰R¹¹M⁵ or R¹²₃C as defined later; L¹ represents a Lewis base; M² and M³ are respectively a boron atom; M⁴ is a metal element selected from the group consisting of elements belonging to Group 1 and Groups 8 to 12 of the Periodic Table; M⁵ is a metal element selected from the group consisting of elements belonging to Groups 8 to 10 of the Periodic Table; Z² to Zⁿ are respectively a hydrogen atom, dialkylamino, alkoxy, aryloxy, C₁ to C₂₀ alkyl, C₆ to C₂₀ aryl, alkylaryl, arylalkyl, substituted alkyl, an organometalloid group or a halogen atom; R¹⁰ and R¹¹ are respectively cyclopentadienyl, substituted cyclopentadienyl, indenyl or fluorenyl; R¹² is alkyl; m represents a valence of M² or M³ and is an integer of 1 to 7; n is an integer of 2 to 8; s represents an ionic valence of L¹-H or L² and is an integer of 1 to 7; t is an integer of 1 or more; 1 is a number of t x s/(n - m).

M² and M³ are respectively a boron atom, and M⁴ is a metal element selected from the group consisting of elements belonging to Group 1 and Groups 8 to 12 of the Periodic Table. Specific examples of the M⁴ include respective atoms such as Ag, Cu, Na and Li. M⁵ is a metal element selected from the group consisting of elements belonging to Groups 8 to 10 of the Periodic Table. Specific examples of the M⁵ include respective atoms such as Fe, Co and Ni.

Specific examples of the Z² to Zⁿ include dialkylamino groups such as dimethylamino and diethylamino; alkoxy groups such as methoxy, ethoxy and n-butoxy; aryloxy groups such as phenoxy, 2,6-dimethylphenoxy and naphthyloxy; C₁ to C₂₀ alkyl groups such as methyl, ethyl, n-propyl, isopropyl, n-butyl, n-octyl and 2-ethylhexyl; C₆ to C₂₀ aryl, alkylaryl or arylalkyl groups such as phenyl, p-tolyl, benzyl, pentafluorophenyl,
3,5-di(trifluoromethyl)phenyl, 4-tert-butylphenyl, 2,6-dimethylphenyl, 3,5-dimethylphenyl, 2,4-dimethylphenyl and 1,2-dimethylphenyl; halogen atoms such as F, Cl, Br and I; and organometalloid groups such as pentamethyl antimony, trimethylsilyl, trimethylgermyl, diphenyl arsine, dicyclohexyl antimony and diphenyl boron.

Specific examples of the substituted cyclopentadienyl groups as R¹⁰ and R¹¹ include methylcyclopentadienyl, butylcyclopentadienyl and pentamethylcyclopentadienyl.

Specific examples of the anion containing a plurality of groups bonded to the metal element include B(C₆F₅)₄⁻, B(C₆HF₄)₄⁻, B(C₆H₂F₃)₄⁻, B(C₆H₃F₂)₄⁻, B(C₆H₄F)₄⁻, B[C₆(CF₃)F₄]₄⁻, B(C₆H₅)₄⁻ and BF₄⁻. Specific examples of the metal cation include Cp₂Fe⁺, (MeCp)₂Fe⁺, (tBuCp)₂Fe⁺, (Me₂Cp)₂Fe⁺, (Me₃Cp)₂Fe⁺, (Me₄Cp)₂Fe⁺, (Me₅Cp)₂Fe⁺, Ag⁺, Na⁺ and Li⁺. Examples of the other cations include nitrogen-containing compounds such as pyridinium, 2,4-dinitro-N,N-diethyl anilinium, diphenyl ammonium, p-nitroanilinium, 2,5-dichloroanilinium, p-nitro-N,N-dimethyl anilinium, quinolinium, N,N-dimethyl anilinium and N,N-diethyl anilinium; carbenium compounds such as triphenyl carbenium, tri(4-methylphenyl)carbenium and tri(4-methoxyphenyl)carbenium; alkyl phosphonium ions such as CH₃PH₃⁺, C₂H₅PH₃⁺, C₃H₇PH₃⁺, (CH₃)₂PH₂⁺, (C₂H₅)₂PH₂⁺, (C₃H₇)₂PH₂⁺, (CH₃)₃PH⁺, (C₂H₅)₃PH⁺, (C₃H₇)₃PH⁺, (CF₃)₃PH⁺, (CH₃)₄P⁺, (C₂H₅)₄P⁺ and (C₃H₇)₄P⁺; and aryl phosphonium ions such as C₆H₅PH₃⁺, (C₆H₅)₂PH₂⁺, (C₆H₅)₃PH⁺, (C₆H₅)₄P⁺, (C₂H₅)₂(C₆H₅)PH⁺, (CH₃)(C₆H₅)PH₂⁺, (CH₃)₂(C₆H₅)PH⁺ and (C₂H₅)₂(C₆H₅)₂P⁺.

In the present invention, there may be used coordination complex compounds composed of an optional combination of the above metal cations and anions.

Specifically, of the compounds represented by the general formulae (III) and (IV), there may be suitably used the following compounds.

Examples of the compounds represented by the general formula (III) include triethyl ammonium tetraphenylborate, tri(n-butyl) ammonium tetraphenylborate, trimethyl ammonium tetraphenylborate, triethyl ammonium tetrakis(pentafluorophenyl)borate, tri(n-butyl) ammonium tetrakis(pentafluorophenyl)borate, triethyl ammonium hexafluoroarsenate, pyridinium tetrakis(pentafluorophenyl)borate, pyrrolinium tetrakis(pentafluorophenyl)borate, N,N-dimethyl anilinium tetrakis(pentafluorophenyl)borate and methyldiphenyl ammonium tetrakis(pentafluorophenyl)borate.

Whereas, examples of the compounds represented by the general formula (IV) include ferrocenium tetraphenylborate, dimethyl ferrocenium tetrakis(pentafluorophenyl)borate, ferrocenium tetrakis(pentafluorophenyl)borate, decamethyl ferrocenium tetrakis(pentafluorophenyl)borate, acetyl ferrocenium tetrakis(pentafluorophenyl)borate, formyl ferrocenium tetrakis(pentafluorophenyl)borate, cyano-ferrocenium tetrakis(pentafluorophenyl)borate, silver tetraphenylborate, silver tetrakis(pentafluorophenyl)borate, trityl tetraphenylborate, trityl tetrakis(pentafluorophenyl)borate and silver tetrafluoroborate.

The suitable coordination complex compounds are those compounds composed of a non-coordinated anion and a substituted triaryl carbenium. Examples of the non-coordinated anion include anions represented by the following genera formula (V):

(M¹Z¹Z²...Zⁿ)^{(n-m)-} (V)

wherein M¹ is a boron atom; Z¹ to Zⁿ are respectively a hydrogen atom, dialkylamino, alkoxy, aryloxy, C₁ to C₂₀ alkyl, C₆ to C₂₀ aryl (including halogen-substituted aryl), alkylaryl, arylalkyl, substituted alkyl, an organometalloid group or a halogen atom; m is a valence of M¹; and n is an integer of 2 to 8.

Further, as the non-coordinated anion, there may be used compounds generally called "carborane".

Also, examples of the substituted triaryl carbenium include cations represented by the following general formula (VI):

[CR¹³R¹⁴R¹⁵]⁺ (VI)

In the above general formula (VI), R¹³, R¹⁴ and R¹⁵ are respectively an aryl group such as phenyl, substituted phenyl, naphthyl and anthracenyl, and may be same or different from each other with the proviso that at least one of R¹³, R¹⁴ and R¹⁵ is substituted phenyl, naphthyl or anthracenyl.

Examples of the substituted phenyl group include those groups represented by the following general formula (VII):

C₆H₅₋ₖR¹⁶ₖ (VII)

In the above general formula (VII), R¹⁶ is C₁ to C₁₀ hydrocarbyl, alkoxy, aryloxy, thioalkoxy, thioaryloxy, amino, amido, carboxyl or a halogen atom; and k is an integer of 1 to 5. When k is 2 or more, a plurality of the R¹⁶ groups may be same or different from each other.

Specific examples of the non-coordinated anion represented by the general formula (V) include tetra(fluorophenyl)borate, tetrakis(difluorophenyl)borate, tetrakis(trifluorophenyl)borate, tetrakis(tetrafluorophenyl)borate, tetrakis(pentafluorophenyl)borate, tetrakis(trifluoromethylphenyl)borate, tetra (toluyl)borate, tetra (xylyl)borate, [(pentafluorophenyl) triphenyl borate], [tris(pentafluorophenyl)phenyl]borate and tridecahydride-7,8-dicarbaundecaborate.

Specific examples of the substituted triaryl carbenium represented by the above general formula (VI) include tri(toluyl)carbenium, tri(methoxyphenyl)carbenium, tri(chlorophenyl)carbenium, tri(fluorophenyl)carbenium, tri(xylyl)carbenium,[di(toluyl)phenyl]carbenium, [di(methoxyphenyl)phenyl]carbenium, [di(chlorophenyl)phenyl]carbenium, [di(phenyl) toluyl]carbenium, [di(phenyl)methoxyphenyl]carbenium and [di(phenyl)chlorophenyl]carbenium.

In addition, as the organoboron compound as the component (B) used in the catalyst of the present invention, there may also be used compounds represented by the following general formula (VIII):

BR¹⁷R¹⁸R¹⁹ (VIII)

wherein R¹⁷, R¹⁸ and R¹⁹ are respectively C₁ to C₂₀ alkyl or C₆ to C₂₀ aryl. Namely, any of the boron compounds containing alkyl or aryl substituent groups bonded to boron may be used as the component (B) without any particular limitations.

The alkyl group may also include halogen-substituted alkyl groups, and the aryl group may also include halogen-substituted aryl groups and alkyl-substituted aryl groups.

Thus, R¹⁷, R¹⁸ and R¹⁹ in the above general formula (VIII) respectively represent C₁ to C₂₀ alkyl or C₆ to C₂₀ aryl. Specific examples of the alkyl and aryl groups include alkyl groups such as methyl, ethyl, propyl, butyl, amyl, isoamyl, isobutyl, octyl and 2-ethylhexyl; and aryl groups such as phenyl, fluorophenyl, tolyl, xylyl and benzyl.

Meanwhile, R¹⁷, R¹⁸ and R¹⁹ may be same or different from each other.

Specific examples of the organoboron compounds represented by the above general formula (VIII) include triphenyl boron, tri(pentafluorophenyl)boron, tri(2,3,4,5-tetrafluorophenyl)boron, tri(2, 4,5,6-tetrafluorophenyl)boron, tri(2,3,5,6-tetrafluorophenyl)boron, tri(2,4,6-trifluorophenyl)boron, tri(3,4,5-trifluorophenyl)boron, tri(2,3,4-trifluorophenyl)boron, tri(3,4,6-trifluorophenyl)boron, tri(2,3-difluorophenyl)boron, tri(2,6-difluorophenyl)boron, tri(3,5-difluorophenyl)boron, tri(2,5-difluorophenyl)boron, tri(2-fluorophenyl)boron, tri(3-fluorophenyl)boron, tri(4-fluorophenyl)boron, tri[3,5-di(trifluoromethyl)phenyl]boron, tri[(4-fluoromethyl)phenyl]boron, diethyl boron, diethylbutyl boron, trimethyl boron, triethyl boron, tri(n-butyl) boron, tri(trifluoromethyl) boron, tri(pentafluoroethyl) boron, tri(nonafluorobutyl) boron, tri(2,4,6-trifluorophenyl) boron, tri(3,5-difluorophenyl) boron, di(pentafluorophenyl) fluoroboron, diphenyl fluoroboron, di(pentafluorophenyl) chloroboron, dimethyl fluoroboron, diethyl fluoroboron, di(n-butyl) fluoroboron, (pentafluorophenyl) difluoroboron, phenyl fluoroboron, (pentafluorophenyl) dichloroboron, methyl difluoroboron, ethyl difluoroboron and (n-butyl) difluoroboron.

Of these compounds, especially preferred is tri(pentafluorophenyl) boron.

The molar ratio of the component (A) to the component (B) used in the present invention is preferably 10:1 to 1:100 and more preferably 1:1 to 1:10. If the molar ratio of the component (A) to the component (B) is out of the above-specified range, the cost performance of the catalyst per unit mass of the obtained polymer is deteriorated and therefore unpractical.

The polymerization catalyst used in the production process of the present invention may further contain an organoaluminum compound as the component (C) in addition to the components (A) and (B).

As the organoaluminum compound (C), there may be used compounds represented by the general formula (IX):

R²⁰ᵥAlJ₃₋ᵥ (IX)

wherein R²⁰ is C₁ to C₁₀ alkyl; J is a hydrogen atom, C₁ to C₂₀ alkoxy, C₆ to C₂₀ aryl or a halogen atom; and v is an integer of 1 to 3.

Specific examples of the compounds represented by the above general formula (IX) include trimethyl aluminum, triethyl aluminum, triisopropyl aluminum, triisobutyl aluminum, dimethyl aluminum chloride, diethyl aluminum chloride, methyl aluminum dichloride, ethyl aluminum dichloride, dimethyl aluminum fluoride, diisobutyl aluminum hydride, diethyl aluminum hydride and ethyl aluminum sesquichloride.

These organoaluminum compounds may be used alone or in the form of a mixture of any two or more thereof.

In the production process of the present invention, the above described components (A), (B) and (C) may be preliminarily contacted with each other.

The preliminary contact may be performed, for example, by contacting the component (B) with the component (A), but is not particularly limited and may be conducted by any known method.

The preliminary contact is effective to improve the catalytic activity, reduce the amount of the component (B) used as a co-catalyst, and reduce the costs required for the catalyst.

Also, when the components (A) and (B) are preliminarily contacted with each other, in addition to the above effects, there can be attained such an effect of increasing a molecular weight of the obtained polymer.

The preliminary contact temperature is usually in the range of -20 to 200°C, preferably -10 to 150°C and more preferably 0 to 80°C.

The preliminary contact may also be conducted in the presence of an inert hydrocarbon solvent such as aliphatic hydrocarbons and aromatic hydrocarbons.

Of these solvents, especially preferred are aliphatic hydrocarbons.

The molar ratio of the catalyst component (A) to the catalyst component (C) is preferably in the range of from 1:1 to 1:10,000 and more preferably from 1:5 to 1:2,500.

When further using the catalyst component (C), the resultant catalyst can be enhanced in polymerization activity per unit quantity of transition metal used. However, the use of a too large amount of the organoaluminum compound as the component (C) is uneconomical and rather tends to cause such a defect that a large amount of the component (C) remains in the obtained polymer.

In the present invention, at least one of the catalyst components may be supported on a suitable carrier.

The carrier usable in the present invention is not particularly limited, and may be appropriately selected from inorganic oxides, other inorganic materials and organic materials. Of these carriers, preferred are those made of inorganic oxides or other inorganic materials.

The use of the supported catalyst enables production of polymers having an industrially useful high bulk density and an excellent particle size distribution.

The propylene-based polymer of the present invention can be produced by homopolymerizing propylene, or copolymerizing propylene with ethylene and/or C₄ to C₂₀ α-olefin, in the presence of the above polymerization catalyst.

Examples of the C₄ to C₂₀ α-olefins include 1-butene, 1-pentene, 4-methyl-1-pentene, 1-hexene, 1-octene, 1-decene, 1-dodecene, 1-tetradecene, 1-hexadecene, 1-octadecene and 1-eicosene. In the present invention, these α-olefins may be used alone or in the form of a mixture of any two or more thereof.

The polymerization methods usable in the present invention are not particularly limited, and include slurry polymerization, vapor-phase polymerization, bulk polymerization, solution polymerization, suspension polymerization or the like.

As to the polymerization conditions, the polymerization temperature is in the range of usually from -100 to 250°C, preferably from -50 to 200°C and more preferably from 0 to 130°C.

Also, the amounts of the reactants and the catalyst used may be controlled such that the molar ratio of the raw monomers to the above component (A) is preferably in the range of 1 to 10⁸ and more preferably 100 to 10⁵.

Further, the polymerization time is usually from 5 min to 10 h, and the polymerization reaction pressure is preferably from ordinary pressure to 20 MPa (gauge) and more preferably from ordinary pressure to 10 MPa (gauge).

The molecular weight of the resultant polymer may be controlled by appropriately selecting kinds and amounts of the respective catalyst components used and polymerization temperature, and further by conducting the polymerization in the presence of hydrogen.

Examples of solvents usable in the polymerization include aromatic hydrocarbons such as benzene, toluene, xylene and ethyl benzene; alicyclic hydrocarbons such as cyclopentane, cyclohexane and methyl cyclohexane; aliphatic hydrocarbons such as pentane, hexane, heptane and octane; and halogenated hydrocarbons such as chloroform and dichloromethane.

These solvent may be used alone or in the form of a mixture of any two or more thereof. Also, the monomers such as α-olefins may be used as the solvent.

Meanwhile, the polymerization may also be performed in the absence of a solvent.

Prior to the substantial polymerization, a preliminary polymerization may be conducted using the above polymerization catalyst.

The preliminary polymerization may be conducted by contacting the solid catalyst component with, for example, a small amount of olefins. The contact method is not particularly limited, and any known method may be used therefor.

Also, the olefins usable in the preliminary polymerization are not particularly limited, and there may be used the above-described olefins, e.g., ethylene, C₃ to C₂₀ α-olefins or mixtures thereof. The olefins used in the preliminary polymerization are preferably identical to those olefins used in the subsequent substantial polymerization.

The preliminary polymerization temperature is in the range of usually from -20 to 200°C, preferably from -10 to 130°C and more preferably from 0 to 80°C.

The preliminary polymerization may be conducted in the presence of any suitable solvent such as aliphatic hydrocarbons, aromatic hydrocarbons and other monomers.

Of these solvents, preferred are aliphatic hydrocarbons.

Also, the preliminary polymerization may be conducted in the absence of a solvent.

The preliminary polymerization conditions may be suitably controlled such that the obtained preliminary polymerization reaction product has an intrinsic viscosity [η] of 0.2 dL/g or higher as measured at 135°C in decalin, and the yield of the preliminary polymerization reaction product is 1 to 10,000 g and preferably 10 to 1,000 g per one millimole of the transition metal component contained in the catalyst.

### [2] Propylene-Based Polymer

The propylene-based polymer prepared according to the process of the present invention satisfies the following requirements (1) to (3).
(1) an intrinsic viscosity [η] of 0.01 to 0.4 dL/g as measured in a tetralin solvent at 135°C;
(2) a crystalline resin having a melting point (Tm -D) of 0 to 120°C, the melting point being defined as a top of a peak observed on a
   highest-temperature side in a melting endothermic curve obtained by a differential scanning calorimeter (DSC) when a sample is held in a nitrogen atmosphere at -10°C for 5 min and then heated at a temperature rise rate of 10°C/min; and
(3) a stereoregularity index ([mm]) of 50 to 90 mol%.

The propylene-based polymer prepared according to the process of the present invention has an intrinsic viscosity [η] of 0.01 to 0.4 dL/g as measured in a tetralin solvent at 135°C. The intrinsic viscosity [η] is preferably 0.1 to 0.4 dL/g.

If the intrinsic viscosity [η] is less than 0.01 dL/g, the resultant polymer tends to be insufficient in adhesion strength.

If the intrinsic viscosity [η] exceeds 0.5 dL/g, the resultant polymer tends to be deteriorated in flowability, resulting in poor coatability.

The propylene-based polymer prepared according to the process of the the present invention must be a crystalline resin having a melting point (Tm -D) of 0 to 120°C and preferably 0 to 100°C as measured by differential scanning calorimeter (DSC), in view of a good softness thereof.

The melting point (Tm - D) is determined by the DSC measurement as follows.

That is, using a differential scanning calorimeter ("DSC-7" available from Perkin Elmer Corp.), 10 mg of a sample is held in a nitrogen atmosphere at -10°C for 5 min, and then heated at a temperature rise rate of 10°C/minute to prepare a melting endothermic curve. The top of a peak observed on the highest temperature side in the melting endothermic curve is defined as the melting point (Tm - D).

The crystalline resin means a resin having the measurable melting point (Tm-D).

The mesopentad fraction (mmmm) is determined according to the method reported and proposed in A. Zambelli, et al., "Macromolecules", 6925(1973).

More specifically, the mesopentad fraction in a polypropylene a molecule is determined by measuring signals attributed to methylene and methine groups using ¹³C nuclear magnetic resonance spectrum.

The larger mesopentad fraction means a higher stereoregularity of the polymer.

The ¹³C nuclear magnetic resonance spectrum measurement is carried out using the following apparatus under the following conditions.

Apparatus: ¹³C-NMR apparatus "JNM-EX400 Model" available from Nippon Denshi Co., Ltd.;
Method: proton complete decoupling method;
Sample concentration: 220 mg/mL;
Solvent: mixed solvent of 1,2,4-trichlorobenzene and heavy benzene (volume ratio: 90:10);
Measuring temperature: 130°C;
Pulse width: 45°;
Pulse repetition period: 4 s; and
Cumulative frequency: 10,000 times

The stereoregularity index ([mm]) is determined from the mesotriad fraction ([mm]) of propylene chains obtained by measuring ¹³C-NMR spectrum thereof under the same conditions as described above using the above ¹³C-NMR apparatus "JNM-EX400 Model" available from Nippon Denshi Co., Ltd.

The larger stereoregularity index ([mm]) means a higher stereoregularity of the polymer.

The propylene-based polymer prepared by the process of the present invention has a stereoregularity index ([mm]) of 50 to 90 mol% and preferably 50 to 80 mol%.

If the stereoregularity index ([mm]) is less than 50 mol%, the resultant polymer tends to suffer from stickiness. If the stereoregularity index ([mm]) is more than 90 mol%, the resultant polymer tends to be deteriorated in fabricability.

Here, the mesopentad fraction (mmmm) is preferably 20 to 80 mol% and more preferably 30 to 70 mol%.

If the mesopentad fraction (mmmm) is less than 20 mol%, the resultant polymer tends to suffer from stickiness. If the mesopentad fraction (mmmm) is more than 80 mol%, the resultant polymer tends to be deteriorated in fabricability.

Whereas, a further propylene-based polymer prepared according to the process of the present invention satisfies the following requirements (1') to (3') in addition to the above requirements (1) to (3).

(1') an intrinsic viscosity [η] of 0.1 to 0.4 dL/g as measured in a tetralin solvent at 135°C;

(2') a crystalline resin having a melting point (Tm -D) of 60 to 120°C, the melting point being defined as a top of a peak observed on a highest-temperature side in a melting endothermic curve obtained by a differential scanning calorimeter (DSC) when a sample is held in a nitrogen atmosphere at -10°C for 5 min and then heated at a temperature rise rate of 10°C/min; and

(3') a mesopentad fraction (mmmm) of 30 to 60 mol%.

The above further propylene-based polymer prepared according to the process of the present invention has an intrinsic viscosity [η] of 0.1 to 0.4 dL/g as measured in a tetralin solvent at 135°C. The intrinsic viscosity [η] is preferably 0.2 to 0.4 dL/g and more preferably 0.2 to 0.3 dL/g.

If the intrinsic viscosity [η] is less than 0.1 dL/g, the resultant polymer tends to be insufficient in strength. For example, when the polymer is used as an adhesive, the resultant adhesive tends to be broken and deteriorated in adhesion strength.

If the intrinsic viscosity [η] exceeds 0.4 dL/g, the resultant polymer tends to be increased in melt viscosity, resulting in deterioration in moldability and processability. For example, when the polymer is used as an adhesive, the resultant adhesive tends to be deteriorated in coatability in a molten state owing to its high viscosity. Further, the adhesive tends to be deteriorated in adhesion strength at the bonded interfacial surface due to its poor flowability.

The above further propylene-based polymer prepared according to the process of the present invention must be a crystalline resin having a melting point (Tm -D) of 60 to 120°C as measured by differential scanning calorimeter (DSC) in view of a good softness thereof. The melting point (Tm -D) of the propylene-based polymer 2 is preferably 60 to 100°C and more preferably 70 to 100°C.

If the melting point (Tm -D) is less than 60°C, the resultant propylene-based polymer 2 tends to be deteriorated in heat resistance. If the melting point (Tm -D) is more than 100°C, the resultant propylene-based polymer 2 tends to be increased in melt viscosity, resulting in poor tenacity.

The above further propylene-based polymer prepared according to the process of the present invention has a mesopentad fraction (mmmm) of 30 to 60 mol%, preferably 30 to 50 mol% and more preferably 35 to 50 mol%.

If the mesopentad fraction (mmmm) is less than 30 mol%, the resultant polymer tends to be deteriorated in crystallinity and suffer from stickiness. If the mesopentad fraction (mmmm) is more than 50 mol%, the resultant polymer tends to show a too high crystallinity and be deteriorated in tenacity, resulting in undesired increase in melt viscosity thereof.

Also, the above further propylene-based polymer prepared according to the process of the present invention preferably has a stereoregularity index ([mm]) of 50 to 80 mol%, more preferably 50 to 70 mol% and still more preferably 50 to 65 mol%.

The propylene-based polymers prepared according to the present invention further satisfy, in addition to the above requirements (1) to (3) and (1') to (3'), (4) a molecular weight distribution (Mw/Mn) of 4 or lower as measured by gel permeation chromatography (GPC), and (5) a weight-average molecular weight of 10,000 to 100,000 as measured by GPC.

The molecular weight distribution (Mw/Mn) as measured by GPC is preferably 3.5 or lower and more preferably 3.0 or lower.

If the molecular weight distribution (Mw/Mn) is more than 4.0, the resultant polymer tends to suffer from stickiness.

Also, the weight-average molecular weight as measured by GPC is preferably 10,000 to 50,000 and more preferably 20,000 to 40,000.

If the weight-average molecular weight (Mw) is less than 10,000, the resultant polymer tends to suffer from stickiness.

Whereas, if the weight-average molecular weight (Mw) is more than 100,000, the resultant polymer tends to be deteriorated in flowability, resulting in poor moldability.

Meanwhile, the molecular weight distribution (Mw/Mn) is calculated from the weight-average molecular weight Mw and number-average molecular weight Mn which are measured by GPC using the following apparatus and conditions:
GPC measuring apparatus
   Column: TOSO GMHHR-H(S)HT
   Detector: RI Detector "WATERS 150C" for liquid chromatogram
Measuring conditions:
   Solvent: 1,2,4-trichlorobenzene;
   Measuring temperature: 145°C;
   Flow rate 1.0 mL/min;
   Sample concentration: 2.2 mg/mL;
   Amount charged: 160 µL;
   Calibration curve: Universal Calibration; and
   Analytic program: HT-GPC (Ver. 10)

When the propylene-based polymer is in the form of a copolymer, the copolymer is preferably a random copolymer.

In addition, the content of structural units derived from propylene in the resultant propylene-based polymer is preferably 90 mol% or higher and more preferably 95 mol% or higher.

If the content of structural units derived from propylene is less than 90 mol%, the resultant propylene-based polymer tends to suffer from stickiness on a surface of the obtained molded articles and be deteriorated in transparency.

When the propylene-based polymer is in the form of a copolymer, the α-olefin content in the copolymer is calculated from ¹³C-NMR spectrum measured using an NMR apparatus "JNM-EX400 Model" available from Nippon Denshi Co., Ltd., under the following conditions.

Sample concentration: 220 mg/3 mL of NMR solution;
NMR solution: mixed solvent of 1,2,4-trichlorobenzene and benzene-d6 (volume ratio: 90:10);
Measuring temperature: 130°C;
Pulse width: 45°;
Pulse repetition period: 10 s; and
Cumulative frequency: 4,000 times.

When the propylene-based polymer according to the process of the present invention is in the form of a propylene homopolymer, the homopolymer may be suitably produced by the above method (a).

Also, when the propylene-based polymer according to the process of the present invention is in the form of a copolymer, the copolymer may be suitably produced by the above method (a').

### [3] Propylene-Based Modifier

The propylene-based modifier is made of the above propylene-based polymer.

The propylene-based modifier can exhibit a low melting point, a good softness and a less stickiness, and can provide a molded article that are excellent in compatibility with polyolefin resins.

Namely, the propylene-based modifier is composed of the specific propylene homopolymer or propylene-based copolymer as described above, and especially contains a slight amount of crystalline portions in polypropylene chain moieties thereof. As a result, the propylene-based modifier exhibits a less stickiness and is excellent in compatibility as compared to conventional modifiers such as soft polyolefin resins.

Further, the propylene-based modifier is excellent in compatibility with polyolefin-based resins, in particular, polypropylene-based resins.

As a result, the propylene-based modifier is prevented from undergoing deteriorated surface properties such as stickiness, and exhibits a high transparency as compared to conventional modifiers such as ethylene-based rubbers.

In view of the above advantageous properties, the propylene-based modifier can be suitably used as a modifier for improving physical properties such as flexibility and transparency.

Furthermore, the propylene-based modifier may also be suitably used as a modifier for improving heat sealability and hot tackiness.

### [4] Hot-melt Adhesive Composition

Further, an adhesive composition containing the highly flowable propylene-based polymer may be provided.

The hot-melt adhesive composition comprises 99 to 50% by weight of the highly flowable propylene-based polymer and 50 to 1% by weight of a tackifier resin, and preferably comprises 60 to 90% by weight of the highly flowable propylene-based polymer and 40 to 10% by weight of a tackifier resin.

In addition, the hot-melt adhesive composition may also contain a viscosity modifier, if required.

If the content of the highly flowable propylene-based polymer is less than 50% by weight and the content of the tackifier resin is more than 50% by weight, the resultant composition tends to be deteriorated in adhesion strength.

Examples of the tackifier resin used in the hot-melt adhesive composition include rosin resins prepared from raw turpentine, terpene resins prepared from raw materials such as α-pinene and β-pinene obtained from pine essential oils, petroleum resins obtained by polymerizing unsaturated hydrocarbon-containing fractions by-produced upon thermal cracking of petroleum naphtha, and hydrogenated products thereof.

Examples of the commercially available tackifier resin include "I-MARB P-125", "I-MARB P-100" and "I-MARB P-90" all available from Idemitsu Petrochemical Co., Ltd., "ESCOLET 5300" and "ESCOLET 2101" available from Exxon Corp., "HILET T1115" available from Mitsui Chemical Inc., "CLEARONE K100" available from Yasuhara Chemical Co., Ltd., "ECR227" available from Tonex Co., Ltd., "ARCON P100" available from Arakawa Chemical Co., Ltd., and "Regasrez 1078" available from Hercules Inc.

Meanwhile, the tackifier resins are preferably used in the form of hydrogenated products thereof in view of compatibility with the base polymer.

Of these resins, more preferred are hydrogenated products of petroleum resins because of excellent thermal stability thereof.

Various additives such as plasticizers, inorganic fillers and antioxidants may be blended in the adhesive composition, if required.

Examples of the plasticizers include waxes, paraffin-based process oils, naphthene-based process oils, phthalic acid esters, adipic acid esters, aliphatic acid esters, glycols, and epoxy-based high-molecular plasticizers.

Specific examples of the waxes include animal and plant waxes, carnauba waxes, candelilla waxes, Japan waxes, beeswaxes, mineral waxes, petroleum waxes, paraffin waxes, microcrystalline waxes, petrolactam waxes, polyethylene waxes, polyethylene oxide waxes, polypropylene waxes, polypropylene oxide waxes, higher fatty acid waxes, higher fatty acid ester waxes, and Fischer-Tropsch waxes.

Examples of the inorganic fillers include clay, talc, calcium carbonate and barium carbonate.

Examples of the antioxidants include phosphorus-based antioxidants such as tris-nonylphenyl phosphite, distearylpentaerythritol diphosphite, "ADEKASTAB 1178" available from Asahi Denka Co., Ltd., "SUMIRISER TNP" available from Sumitomo Chemical Co., Ltd., "IRGAPHOS 168" available from Ciba Specialty Chemicals Corp., and "Sandtab P-EPQ" available from Sand Co., Ltd.; phenol-based anti-oxidants such as 2,6-di-t-butyl-4-methyl phenol, n-octadecyl-3-(3',5'-di-t-butyl-4'-hydroxyphenyl) propionate, "SUMIRISER BHT" available from Sumitomo Chemical Co., Ltd., and "IRGANOX 1010" available from Ciba Specialty Chemicals Corp.; and sulfur-based anti-oxidants such as dilauryl-3,3'-thiodipropionate, pentaerythritol tetrais(3-laurylthiopropionate), "SUMIRISER TPL" available from Sumitomo Chemical Co., Ltd., "YOSHINOX DLTP" available from Yoshitomi Seiyaku Co., Ltd., and "ANTIOX L" available from Nippon Yushi Co., Ltd.

### (Process for Production of Hot-Melt Adhesive Composition)

The hot-melt adhesive composition may be produced by dry-blending 50 to 99% by weight of the highly flowable propylene-based polymer, 50 to 1% by weight of the tackifier resin, and various optional additives usable according to requirements, with each other using a Henschel mixer, and then melt-kneading the resultant mixture using a single-or twin-screw extruder, a plastomill or a Banbury mixer.

Examples of the additives optionally added to the composition include the above plasticizers, inorganic fillers and antioixdants.

The present invention will be described in more detail by reference to the following examples. However, it should be noted that the following examples are only illustrative and not intended to limit the invention thereto.

First, methods for evaluating resin properties of the propylene-based polymers obtained by the production process of the present invention are explained.

### (1) Measurement of Mesopentad Fraction and Stereoregularity Index

Measured by the methods described in the present specification.

### (2) Measurement of Intrinsic Viscosity [η] [0178]

The intrinsic viscosity of the polymer was measured at 135°C in a tetralin solvent using an automatic viscometer "VMR-053 Model" available from Rigosha Co., Ltd.

### (3) Measurement of Weight-Average Molecular Weight (Mw) and Molecular Weight Distribution (Mw/Mn)

Measured by the method described in the present specification.

### (4) DSC Measurement (Measurement of Melting Point: Tm - D)

Measured by the method described in the present specification.

More specifically, using a differential scanning calorimeter "DSC-7" available from Perkin Elmer Corp., 10 mg of a sample was held in a nitrogen atmosphere at -10°C for 5 min, and then heated at a temperature rise rate of 10°C/min to prepare a melting endothermic curve thereof. The melting point (Tm - D) was defined as a top of a peak observed on the highest-temperature side in the thus prepared melting endothermic curve.

### EXAMPLE 1

### (1) Production of Catalyst: Production of (1,2'-dimethylsilylene) (2,1'-dimethylsilylene)-bis(3-trimethylsilylmethylindenyl) zirconium dichloride

In a Schlenk bottle, 3.0 g (6.97 mM) of a lithium salt of (1,2'-dimethylsilylene) (2,1'-dimethylsilylene)-bis(indene) was dissolved in 50 mL of THF (tetrahydrofuran), and the resultant solution was cooled to -78°C.

Then, 2.1 mL (14.2 mM) of iodomethyl trimethylsilane was slowly dropped to the solution, and the mixture was stirred at room temperature for 12 h.

The resultant reaction solution was distilled to remove the solvent therefrom, and then after adding 50 mL of ether thereto, the reaction solution was washed with a saturated ammonium chloride solution.

An organic phase separated from the solution was dried to remove the solvent therefrom, thereby obtaining 3.04 g (5.88 mM) of (1,2'-dimethylsilylene)
(2,1'-dimethylsilylene)-bis(3-trimethylsilylmethylindene) (yield:84%).

Next, a Schlenk bottle was charged with 3.04 g (5.88 mM) of the thus obtained (1,2'-dimethylsilylene)
(2,1'-dimethylsilylene)-bis(3-trimethylsilylmethylindene) and 50 mL of ether under a nitrogen flow.

After the contents of the bottle were cooled to -78°C, 7.6 mL of a hexane solution of n-BuLi (1.54M; 1.7 mM) was dropped thereto. The temperature of the resultant mixture was raised to room temperature, and then stirred at room temperature for 12 h. Then, the ether was distilled away from the reaction mixture.

The thus obtained solid was washed with 40 mL of hexane to obtain 3.06 g (5.07 mM) of a lithium salt in the form of an ether adduct (yield: 73%).

The results of ¹H-NMR (90 MHz, THF-d₈) measurement of the obtained product were as follows:
δ: 0.04 (s, 18H, trimethylsilyl); 0.48 (s, 12H, dimethylsilylene); 1.10 (t, 6H, methyl); 2.59 (s, 4H, methylene); 3.38 (q, 4H, methylene); 6.2-7.7 (m, 8H, Ar-H)

The thus obtained lithium salt was dissolved in 50 mL of toluene under a nitrogen flow.

After the resultant solution was cooled to -78°C, a suspension prepared by dispersing 1.2 g (5.1 mM) of zirconium tetrachloride in 20 mL of toluene which was previously cooled to -78°C, was dropped into the solution.

After completion of the dropping, the resultant mixture was stirred at room temperature for 6 h. The resultant reaction solution was distilled to remove the solvent therefrom. The obtained distillation residue was recrystallized with dichloromethane, thereby obtaining 0.9 g (1.33 mM) of (1,2'-dimethylsilylene)
(2,1'-dimethylsilylene)-bis(3-trimethylsilylmethylindenyl) zirconium dichloride (yield: 26%).

The results of ¹H-NMR (90 MHz, CDCl₃) measurement of the obtained product were as follows:
δ: 0.0 (s, 18H, trimethylsilyl); 1.02, 1.12 (s, 12H, dimethylsilylene); 2.51 (dd, 4H, methylene); 7.1-7.6 (m, 8H, Ar-H)

### (2) Polymerization

A 1 L autoclave previously heat-dried was charged with 400 mL of heptane, 0.5 mM of triisobutyl aluminum, 0.8 µM of N,N-dimethyl anilinium tetrakispentafluorophenyl borate and 0.2 µM of (1,2'-dimethylsilylene) (2,1'-dimethylsilylene)-bis(3-trimethylsilylmethylindenyl) zirconium dichloride. Further, hydrogen in an amount of 0.2 Pa as well as propylene were introduced into the autoclave to thereby control a total pressure of the reaction system to 0.8 MPa under which conditions the polymerization was conducted at 70°C for 30 min.

After completion of the polymerization reaction, the resultant reaction product was dried under reduced pressure to obtain 110 g of a propylene-based polymer.

As a result, it was confirmed that the thus obtained propylene-based polymer had an intrinsic viscosity [η] of 0.43 dL/g, a melting point Tm-D of 86°C, a stereoregularity (mesopentad fraction) (mmmm) of 43 mol%, and a stereoregularity index ([mm]) of 62 mol%.

### EXAMPLE 2

### (1) Polymerization

A 1 L autoclave previously heat-dried was charged with 400 mL of heptane, 20 mL of buten-1, 0.5 mM of triisobutyl aluminum, 0.8 µM of N,N-dimethyl anilinium tetrakispentafluorophenyl borate and 0.2 µM of (1,2'-dimethylsilylene)
(2,1'-dimethylsilylene)-bis(3-trimethylsilylmethylindenyl) zirconium dichloride as produced in EXAMPLE 1. Further, hydrogen in an amount of 0.2 Pa as well as propylene were introduced into the autoclave to thereby control a total pressure of the reaction system to 0.8 MPa under which conditions the polymerization was conducted at 70°C for 15 min.

After completion of the polymerization reaction, the resultant reaction product was dried under reduced pressure to obtain 57 g of a propylene-based polymer.

As a result, it was confirmed that the thus obtained propylene-based polymer had an intrinsic viscosity [η] of 0.41 dL/g, a 1-butene content of 8 mol%, a melting point Tm-D of 50°C, and a stereoregularity index ([mm]) of 63 mol%.

### EXAMPLE 3

### (1) Polymerization

A 1 L autoclave previously heat-dried was charged with 400 mL of heptane, 10 mL of 1-octene, 0.5 mM of triisobutyl aluminum, 0.8 µM of dimethyl anilinium tetrakispentafluorophenyl borate and 0.2 µM of (1,2'-dimethylsilylene)
(2,1'-dimethylsilylene)-bis(3-trimethylsilylmethylindenyl) zirconium dichloride as produced in EXAMPLE 1. Further, hydrogen in an amount of 0.2 Pa as well as propylene were introduced into the autoclave to thereby control a total pressure of the reaction system to 0.8 MPa under which conditions the polymerization was conducted at 70°C for 30 min.

After completion of the polymerization reaction, the resultant reaction product was dried under reduced pressure to obtain 35 g of a propylene-based polymer.

As a result, it was confirmed that the thus obtained propylene-based polymer had an intrinsic viscosity [η] of 0.42 dL/g, a 1-octene content of 4 mol%, a melting point Tm-D of 49°C, and a stereoregularity index ([mm]) of 61 mol%.

### COMPARATIVE EXAMPLE 1

The same procedure as in EXAMPLE 1 was repeated except for replacing 0.8 M of N,N-dimethyl anilinium tetrakispentafluorophenyl borate with 0.2 mM of methyl aluminoxane. The polymerization reaction was conducted for 30 min and the resultant reaction product was dried in the same manner as in EXAMPLE 1, thereby obtaining 5 g of a propylene-based polymer.

As a result, it was confirmed that the thus obtained propylene-based polymer had an intrinsic viscosity [η] of 0.7 dL/g, a melting point Tm-D of 70°C, a stereoregularity (mesopentad fraction) (mmmm) of 44 mol%, and a stereoregularity index ([mm]) of 62 mol%.

### EXAMPLE 4

### (1) Polymerization

A 10 L autoclave previously heat-dried was charged with 4,000 mL of heptane, and then evacuated. Thereafter, hydrogen in an amount of 0.5 MPa and then propylene were introduced into the autoclave, and the reaction system was heated and pressurized until reaching the polymerization temperature of 80°C and the total pressure of 0.8 MPa.

Next, the autoclave was further charged with 5 mM of triisobutyl aluminum, 25 µM of N,N-dimethyl anilinium tetrakispentafluorophenyl borate and 5 µM of (1,2'-dimethylsilylene) (2,1'-dimethylsilylene)-bis(3-trimethylsilylmethylindenyl) zirconium dichloride as produced in EXAMPLE 1, and then the polymerization was conducted for 60 min.

After completion of the polymerization reaction, the resultant reaction product was dried under reduced pressure to obtain 1.1 kg of a propylene-based polymer.

Resin properties and physical properties of the thus obtained propylene-based polymer are shown in Table 1-1.

### EXAMPLE 5

### (1) Polymerization

A 10 L autoclave previously heat-dried was charged with 4,000 mL of heptane, and then evacuated. Thereafter, hydrogen in an amount of 0.3 MPa and then propylene were introduced into the autoclave, and the reaction system was heated and pressurized until reaching the polymerization temperature of 80°C and the total pressure of 0.8 MPa.

Next, the autoclave was further charged with 5 mM of triisobutyl aluminum, 10 µM of N,N-dimethyl anilinium tetrakispentafluorophenyl borate and 2 µM of (1,2'-dimethylsilylene) (2,1'-dimethylsilylene)-bis(3-trimethylsilylmethylindenyl) zirconium dichloride as produced in EXAMPLE 1, and then the polymerization was conducted for 45 min.

After completion of the polymerization reaction, the resultant reaction product was dried under reduced pressure to obtain 1.8 kg of a propylene-based polymer.

Resin properties and physical properties of the thus obtained propylene-based polymer are shown in Table 1-1.

### EXAMPLE 6

### (1) Polymerization

A 10 L autoclave previously heat-dried was charged with 4,000 mL of heptane, and then evacuated. Thereafter, hydrogen in an amount of 0.2 MPa and then propylene were introduced into the autoclave, and the reaction system was heated and pressurized until reaching the polymerization temperature of 80°C and the total pressure of 0.8 MPa.

Next, the autoclave was further charged with 5 mM of triisobutyl aluminum, 5 µM of N,N-dimethyl anilinium tetrakispentafluorophenyl borate and 1 µM of (1,2'-dimethylsilylene) (2,1'-dimethylsilylene)-bis(3-trimethylsilylmethylindenyl) zirconium dichloride as produced in EXAMPLE 1, and then the polymerization was conducted for 60 min.

After completion of the polymerization reaction, the resultant reaction product was dried under reduced pressure to obtain 1.4 kg of a propylene-based polymer.

Resin properties and physical properties of the thus obtained propylene-based polymer are shown in Table 1-1.

### EXAMPLE 7

### (1) Polymerization

A 10 L autoclave previously heat-dried was charged with 4,000 mL of heptane, and then evacuated. Thereafter, hydrogen in an amount of 0.1 MPa and then propylene were introduced into the autoclave, and the reaction system was heated and pressurized until reaching the polymerization temperature of 80°C and the total pressure of 0.8 MPa.

Next, the autoclave was further charged with 5 mM of triisobutyl aluminum, 10 µM of N,N-dimethyl anilinium tetrakispentafluorophenyl borate and 2 µM of (1,2'-dimethylsilylene)
(2,1'-dimethylsilylene)-bis(3-trimethylsilylmethylindenyl) zirconium dichloride as produced in EXAMPLE 1, and then the polymerization was conducted for 30 min.

After completion of the polymerization reaction, the resultant reaction product was dried under reduced pressure to obtain 1.5 kg of a propylene-based polymer.

Resin properties and physical properties of the thus obtained propylene-based polymer are shown in Table 1-2.

### EXAMPLE 8

### (1) Production of Catalyst: Production of (1,2'-dimethylsilylene) (2,1'-dimethylsilylene)(3-trimethylsilylmethylindenyl) indenyl zirconium dichloride

A 200 mL Schlenk bottle was charged with 50 mL of ether and 3.5 g (10.2 mM) of (1,2'-dimethylsilylene) (2,1'-dimethylsilylene)bisindene under a nitrogen flow. After the contents of the bottle were cooled to -78°C, 12.8 mL of a hexane solution containing 1.60 M/L of n-butyl lithium (n-BuLi) was dropped thereto.

The resultant reaction mixture was stirred at room temperature for 8 h, and then the solvent was distilled away therefrom. The obtained solid was dried under reduced pressure to obtain 5.0 g of a white solid.

The white solid was dissolved in 50 mL of tetrahydrofuran (THF), and then 1.4 mL of iodomehyltrimethylsilane was dropped to the resultant solution at room temperature.

Next, the resultant reaction solution was mixed and hydrolyzed with 10 mL of water, and an organic phase thereof was extracted with 50 mL of ether. The thus extracted organic phase was then dried to distil off the solvent therefrom.

After adding 50 mL of ether to the obtained residue, 12.4 mL of a hexane solution containing 1.60 M/L of n-BuLi was dropped thereto at -78°C. The resultant reaction solution was heated to room temperature and stirred for 3 h to distil off the ether therefrom.

The obtained solid was washed with 30 mL of hexane and then dried under reduced pressure to obtain a white solid.

Then, 5.11 g of the thus obtained white solid was suspended in 50 mL of toluene, and then mixed with a slurry separately prepared by suspending 2.0 g (8.60 mM) of zirconium tetrachloride in 10 mL of toluene in another Schlenk bottle.

The obtained suspension was stirred at room temperature for 12 h, and the solvent was distilled away therefrom. Then, the obtained residue was washed with 50 mL of hexane, and then recrystallized with 30 mL of dichloromethane to obtain 1.2 g of yellow fine crystals (yield: 25%).

¹H-NMR (90 MHz, CDCl₃): δ-0.09 (s, trimethylsilyl, 9H); 0.89, 0.86, 1.03, 1.06 (s, dimethylsilylene, 12H); 2.20, 2.65 (d, methylene, 2H); 6.99 (s, CH, 1H); 7.0-7.8 (m, Ar-H, 8H)

### (2) Polymerization

A 10 L autoclave previously heat-dried was charged with 4,000 mL of heptane, and then evacuated. Thereafter, hydrogen in an amount of 0.1 MPa and then propylene were introduced into the autoclave, and the reaction system was heated and pressurized until reaching the polymerization temperature of 80°C and the total pressure of 0.8 MPa.

Next, the autoclave was further charged with 5 mM of triisobutyl aluminum, 5 µM of N,N-dimethyl anilinium tetrakispentafluorophenyl borate and 1 µM of (1,2'-dimethylsilylene) (2,1'-dimethylsilylene)- (3-trimethylsilylmethylindenyl)indenyl zirconium dichloride as produced in above (1), and then the polymerization was conducted for 90 min.

After completion of the polymerization reaction, the resultant reaction product was dried under reduced pressure to obtain 2.1 kg of a propylene-based polymer.

Resin properties and physical properties of the thus obtained propylene-based polymer are shown in Table 1-2.

### EXAMPLE 9

### (1) Polymerization

A 10 L autoclave previously heat-dried was charged with 4,000 mL of heptane, and then evacuated. Thereafter, hydrogen in an amount of 0.3 MPa and then propylene were introduced into the autoclave, and the reaction system was heated and pressurized until reaching the polymerization temperature of 80°C and the total pressure of 0.8 MPa.

Next, the autoclave was further charged with 5 mM of triisobutyl aluminum, 5 µM of N,N-dimethyl anilinium tetrakispentafluorophenyl borate and 1 µM of (1,2'-dimethylsilylene) (2,1'-dimethylsilylene)-bis(3-trimethylsilylmethylindenyl) zirconium dichloride as produced in EXAMPLE 1, and then the polymerization was conducted for 90 min.

After completion of the polymerization reaction, the resultant reaction product was dried under reduced pressure to obtain 1.3 kg of a propylene-based polymer.

Resin properties and physical properties of the thus obtained propylene-based polymer are shown in Table 1-2.

**Table 1-1**

| | Example 4 | Example 5 | Example 6 |
|---|---|---|---|
| Mesopentad fraction (mol%) | 39 | 42 | 42 |
| Abnormal insertion content (mol%) | 0 | 0 | 0 |
| Stereoregularity index (mol%) | 54 | 58 | 58 |
| [η] (dL/g) | 0.11 | 0.17 | 0.31 |
| Mw x 10⁴ | 1.3 | 1.5 | 3.0 |
| Mw/Mn | 1.9 | 2.1 | 2.0 |
| Tm - D(°C) | 72 | 79 | 78 |
| ΔH (J/g) | 19 | 25 | 25 |

**Table 1-2**

| | Example 7 | Example 8 | Example 9 |
|---|---|---|---|
| Mesopentad fraction (mol%) | 41 | 47 | 44 |
| Abnormal insertion content (mol%) | 0 | 0 | 0 |
| Stereoregularity index (mol%) | 57 | 65 | 61 |
| [η] (dL/g) | 0.33 | 0.35 | 0.24 |
| Mw x 10⁴ | 3.4 | 3.8 | 2.3 |
| Mw/Mn | 1.8 | 1.8 | 1.9 |
| Tm - D (°C) | 74 | 95 | 98 |
| ΔH (J/g) | 26 | 33 | 34 |

The propylene-based polymer obtained in each of Examples 4, 7 and 9, a tackifier "I-MARB P-100" available from Idemitsu Petrochemical Co., Ltd., and a plasticizer "Paraffin Wax 150°F" available from Nippon Seiroh Co., Ltd., were blended with each other in a SUS beaker according to the formulation shown in Tables 2-1 and 2-2, and melt-kneaded at 180°C for 30 min to obtain a hot-melt adhesive composition.

The thus obtained adhesive compositions were evaluated by the following evaluation methods. The results are shown in Tables 2-1 and 2-2.

### [Evaluation Methods]

### (1) Melt-Viscosity of Hot-Melt Adhesive

Measured according to JAI-7which is a standard prescribed by Institute of Japan Adhesive Industry.
Viscometer: Brookfield-type viscometer
Measuring temperature: 180°C

### (2) Adhesion Property of Hot-Melt Adhesive

Test specimen: Corrugated board
Shape of test specimen: width: 25 mm; length: 100 mm
Adhesive-coating temperature: The temperature was controlled such that the melt viscosity of the adhesive was in the range of 1,000 to 2,000 mPa·s upon coating.
Coating amount of adhesive: 3 g/m
Open time: 2 sec
Setting time: 2 sec
Conditioning of test specimen: 3 days at room temperature
Breaking method: T-shaped test specimen was rapidly peeled by hands
Testing temperature: 23°C

Evaluation method: Five test pieces (n = 5) was tested for each specimen, and evaluated according to the following ratings.
A: 4 or more pieces with a break rate of 80% or higher
B: 1 to 3 pieces with a break rate of 80% or higher
C: No pieces with a break rate of 80% or higher

**Table 2-1**

| | Evaluation Example 1 | Evaluation Example 2 | Evaluation Example 3 |
|---|---|---|---|
| Blending ratio (%) | | | |
| Propylene-based polymer* | Example 4 | Example 7 | Example 9 |
| | 70 | 70 | 70 |
| Tackifier | 30 | 30 | 30 |
| Viscosity modifier | 0 | 0 | 0 |
| Melt-viscosity at 180°C (mPa·s) | 140 | 1430 | 610 |
| Coating temperature (°C) | 110 | 180 | 160 |
| Adhesion property at room temperature (break rate: %) | B | A | A |

| | | | |
|---|---|---|---|
| Note *: Blended with 1000 ppm of antioxidant (IRGANOX 1010) | | | |

**Table 2-2**

| | Evaluation Example 4 | Evaluation Example 5 | Evaluation Example 6 |
|---|---|---|---|
| Blending ratio (%) | | | |
| Propylene-based polymer* | Example 4 | Example 7 | Example 9 |
| | 63 | 63 | 63 |
| Tackifier | 27 | 27 | 27 |
| Viscosity modifier | 10 | 10 | 10 |
| Melt-viscosity at 180°C (mPa·s) | 90 | 660 | 280 |
| Coating temperature (°C) | 100 | 160 | 120 |
| Adhesion property at room temperature (break rate: %) | C | A | A |

| | | | |
|---|---|---|---|
| Note *: Blended with 1000 ppm of antioxidant (IRGANOX 1010) | | | |

### INDUSTRIAL APPLICABILITY

According to the present invention, it is possible to produce a propylene-based polymer having a uniform composition, a well-controlled stereoregularity, a high flowability and a high flexibility.

Also, the propylene-based modifier of the present invention can provide a molded article having a good softness, a less stickiness, and an excellent compatibility with polyolefin resins.

Further, the hot-melt adhesive composition of the present invention is excellent in heat resistance and flowability under high-temperature conditions as well as adhesion to low-polar substances, and can be suitably used as usable for sanitary materials, packing, bookbinding, fibers, woodworking, electric materials, canmaking, building, bagmaking, etc.

## Claims

1. A process for producing a highly flowable propylene-based polymer, comprising:
polymerizing propylene in the presence of a polymerization catalyst comprising:
(A) a transition metal compound containing double crosslinking type biscyclopentadienyl derivatives represented by the following general formula (II) 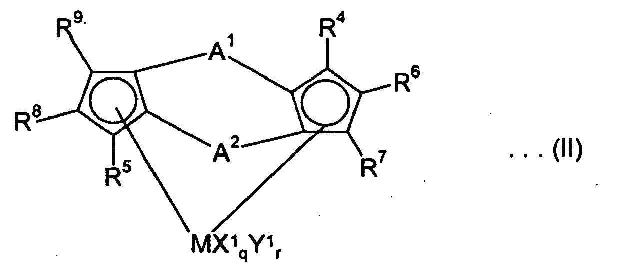 wherein M is a metal element belonging to Groups 3 to 10 or lanthanoid of the Period Table;
A¹ and A² are divalent cross-linking groups capable of bonding the two ligands to each other which are the same or different from each other, and are independently a C₁ to C₂₀ hydrocarbon group, a C₁ to C₂₀ halogen-containing hydrocarbon group or a silicon-containing group;
R⁴ to R⁹ are independently a hydrogen atom, a halogen atom, a C₁ to C₂₀ hydrocarbon group, a C₁ to C₂₀ halogen-containing hydrocarbon group, a silicon-containing group or a hetero atom-containing group and at least one of R⁴ to R⁹ is a group other than a hydrogen atom and R⁴ to R⁹ are the same or different from each other, and adjacent two groups thereof are optionally bonded to each other to form a ring;
X¹ is a ligand capable of forming a σ-bond wherein when a plurality of X¹ groups are present, these X¹ groups may be same or different from each other, and may be cross-linked with the other X¹ group or Y¹ group;
Y¹ is a Lewis base and when a plurality of Y¹ groups are present, these Y¹ groups are the same or different from each other, and are optionally cross-linked with the other Y¹ group or X¹ group;
q is an integer of 1 to 5 calculated from the formula:
[(valence of M) - 2 ] ; and
r is an integer of 0 to 3, and
(B) an organoboron compound;
wherein the propylene-based polymer has an intrinsic viscosity of 0.01 to 0.4 dl/g as measured in a tetralin solvent at 135°C.

2. The process of claim 1, wherein the propylene-based polymer has an intrinsic viscosity of 0.1 to 0.4 dl/g as measured in a tetralin solvent at 135°C.

3. A process for producing a highly flowable propylene-based polymer, comprising:
copolymerizing propylene with ethylene and/or a C₄ to C₂₀ α-olefin in the presence of a polymerization catalyst comprising:
(A) a transition metal compound containing double crosslinking type biscyclopentadienyl derivatives represented by the following general formula (II) 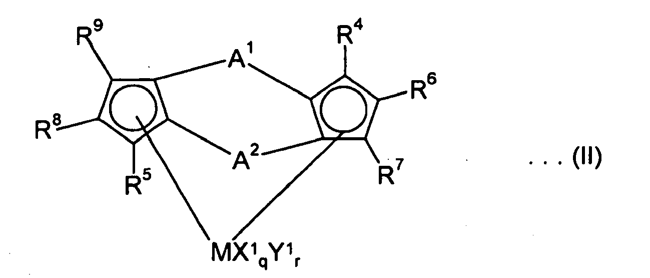 wherein M is a metal element belonging to Groups 3 to 10 or lanthanoid of the Period Table;
A¹ and A² are divalent cross-linking groups capable of bonding the two ligands to each other which are the same or different from each other, and are independently a C₁ to C₂₀ hydrocarbon group, a C₁ to C₂₀ halogen-containing hydrocarbon group or a silicon-containing group;
R⁴ to R⁹ are independently a hydrogen atom, a halogen atom, a C₁ to C₂₀ hydrocarbon group, a C₁ to C₂₀ halogen-containing hydrocarbon group, a silicon-containing group or a hetero atom-containing group and at least one of R⁴ to R⁹ is a group other than a hydrogen atom and R⁴ to R⁹ are the same or different from each other, and adjacent two groups thereof are optionally bonded to each other to form a ring;
X¹ is a ligand capable of forming a σ-bond wherein when a plurality of X¹ groups are present, these X¹ groups may be same or different from each other, and may be cross-linked with the other X¹ group or Y¹ group;
Y¹ is a Lewis base and when a plurality of Y¹ groups are present, these Y¹ groups are the same or different from each other, and are optionally cross-linked with the other Y¹ group or X¹ group;
q is an integer of 1 to 5 calculated from the formula:
[(valence of M) - 2 ] ; and
r is an integer of 0 to 3, and
(B) an organoboron compound;
wherein the propylene-based polymer has an intrinsic viscosity of 0.01 to 0.4 dl/g as measured in a tetralin solvent at 135°C.

4. The process of claim 3, wherein the propylene-based polymer has an intrinsic viscosity of 0.1 to 0.4 dl/g as measured in a tetralin solvent at 135°C.

5. The process for preparing a propylene-based polymer according to any of the previous claims, wherein R⁴ and R⁵ are groups containing a hetero atom selected from the group consisting of oxygen, halogen and silicon.

## Patentansprüche

1. Verfahren zur Herstellung eines hoch fließfähigen Polymers auf Propylen-Basis, umfassend:
Polymerisieren von Propylen in Gegenwart eines Polymerisationskatalysators, der umfasst:
(A) eine Übergangsmetallverbindung, die durch die folgende allgemeine Formel (II) dargestellte Biscyclopentadienyl-Derivate vom doppelt vernetzenden Typ enthält 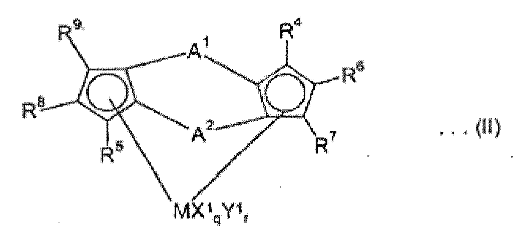 wobei M ein Metallelement ist, das zu den Gruppen 3 bis 10 oder den Lanthanoiden des Periodensystems gehört;
A¹ und A² divalente vernetzende Gruppen sind, die zur Bindung der beiden Liganden aneinander fähig sind, die gleich oder verschieden voneinander sind, und unabhängig voneinander eine C₁ bis C₂₀ Kohlenwasserstoffgruppe, eine halogenhaltige C₁ bis C₂₀ Kohlenwasserstoffgruppe oder eine siliziumhaltige Gruppe sind;
R⁴ bis R⁹ unabhängig voneinander ein Wasserstoffatom, ein Halogenatom, eine C₁ bis C₂₀ Kohlenwasserstoffgruppe, eine halogenhaltige C₁ bis C₂₀ Kohlenwasserstoffgruppe, eine siliziumhaltige Gruppe oder eine heteroatomhaltige Gruppe sind und mindestens eine von R⁴ bis R⁹ eine von Wasserstoffatom verschiedene Gruppe ist, und R⁴ bis R⁹ gleich oder verschieden voneinander sind, und zwei benachbarte Gruppen davon gegebenenfalls unter Bildung eines Rings aneinander gebunden sind;
X¹ ein Ligand ist, der zur Bildung einer σ-Bindung fähig ist, wobei, wenn mehrere X¹-Gruppen vorliegen, diese X¹-Gruppen gleich oder verschieden sein können und mit der anderen X¹-Gruppe oder Y¹-Gruppe vernetzt sein können;
Y¹ eine Lewis-Base ist, und wenn mehrere Y¹-Gruppen vorliegen, diese Y¹-Gruppen gleich oder verschieden voneinander sind, und gegebenenfalls mit der anderen Y¹-Gruppe oder X¹-Gruppe vernetzt sind;
q eine ganze Zahl von 1 bis 5 ist, berechnet nach der Formel:
[(Valenz von M)-2]; und
r eine ganze Zahl von 0 bis 3 ist, und
(B) eine Organoborverbindung;
wobei das Polymer auf Propylen-Basis eine intrinsische Viskosität von 0,01 bis 0,4 dl/g aufweist, gemessen in einem Tetralinlösungsmittel bei 135°C.

2. Verfahren nach Anspruch 1 , wobei das Polymer auf Propylenbasis eine intrinsische Viskosität von 0,1 bis 0,4 dl/g aufweist, gemessen in einem Tetralinlösungsmittel bei 135°C.

3. Verfahren zur Herstellung eines hoch fließfähigen Polymers auf Propylen-Basis, umfassend:
Copolymerisieren von Propylen mit Ethylen und/oder an C₄ bis C₂₀ α-Olefin in Gegenwart eines Polymerisationskatalysators, der umfasst:
(A) eine Übergangsmetallverbindung, die durch die folgende allgemeine Formel (II) dargestellte Biscyclopentadienyl-Derivate vom doppelt vernetzenden Typ enthält 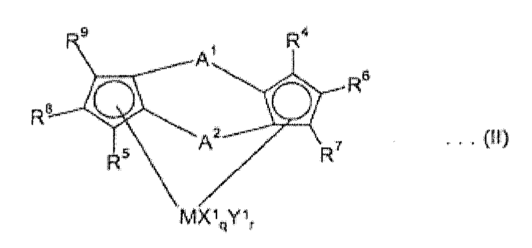 wobei M ein Metallelement ist, das zu den Gruppen 3 bis 10 oder den Lanthanoiden des Periodensystems gehört;
A¹ und A² divalente vernetzende Gruppen sind, die zur Bindung der beiden Liganden aneinander fähig sind, die gleich oder verschieden voneinander sind, und unabhängig voneinander eine C₁ bis C₂₀ Kohlenwasserstoffgruppe, eine halogenhaltige C₁ bis C₂₀ Kohlenwasserstoffgruppe oder eine siliziumhaltige Gruppe sind;
R⁴ bis R⁹ unabhängig voneinander ein Wasserstoffatom, ein Halogenatom, eine C₁ bis C₂₀ Kohlenwasserstoffgruppe, eine halogenhaltige C₁ bis C₂₀ Kohlenwasserstoffgruppe, eine siliziumhaltige Gruppe oder eine heteroatomhaltige Gruppe sind und mindestens eine von R⁴ bis R⁹ eine von Wasserstoffatom verschiedene Gruppe ist, und R⁴ bis R⁹ gleich oder verschieden voneinander sind, und zwei benachbarte Gruppen davon gegebenenfalls unter Bildung eines Rings aneinander gebunden sind;
X¹ ein Ligand ist, der zur Bildung einer σ-Bindung fähig ist, wobei, wenn mehrere X¹-Gruppen vorliegen, diese X¹-Gruppen gleich oder verschieden sein können und mit der anderen X¹-Gruppe oder Y¹-Gruppe vernetzt sein können;
Y¹ eine Lewis-Base ist, und wenn mehrere Y¹-Gruppen vorliegen, diese Y¹-Gruppen gleich oder verschieden voneinander sind, und gegebenenfalls mit der anderen Y¹-Gruppe oder X¹-Gruppe vernetzt sind;
q eine ganze Zahl von 1 bis 5 ist, berechnet nach der Formel:
[(Valenz von M)-2]; und
r eine ganze Zahl von 0 bis 3 ist, und
(B) eine Organoborverbindung;
wobei das Polymer auf Propylen-Basis eine intrinsische Viskosität von 0,01 bis 0,4 dl/g aufweist, gemessen in einem Tetralinlösungsmittel bei 135°C.

4. Verfahren nach Anspruch 3, wobei das Polymer auf Propylen-Basis eine intrinsische Viskosität von 0,1 bis 0,4 dl/g aufweist, gemessen in einem Tetralinlösungsmittel bei 135°C.

5. Verfahren zur Herstellung eines Polymeren auf Propylen-Basis nach einem der vorstehenden Ansprüche, wobei R⁴ und R⁵ Gruppen sind, die ein Heteroatom enthalten, das ausgewählt wird aus der aus Sauerstoff, Halogen und Silizium bestehenden Gruppe.

## Revendications

1. Procédé de production d'un polymère à base de propylène à grande aptitude à l'écoulement, comprenant :
la polymérisation du propylène en présence d'un catalyseur de polymérisation comprenant :
(A) un composé de métal de transition contenant des dérivés biscyclopentadiényle de type à double réticulation représenté par la formule générale suivante (II) 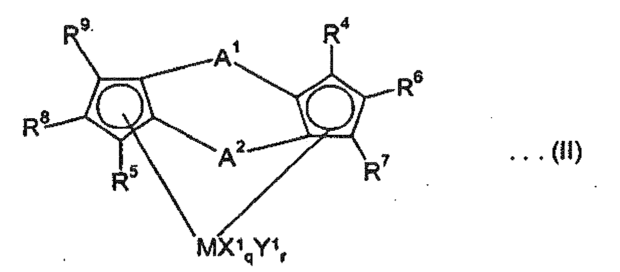 où M est un élément métallique appartenant aux groupes 3 à 10 ou des lanthanides du tableau périodique ;
A¹ et A² sont des groupes de réticulation divalents capables de lier les deux ligands l'un à l'autre et qui sont identiques ou différents l'un de l'autre, et sont indépendamment un groupe hydrocarbure en C₁ à C₂₀, un groupe hydrocarbure en C₁ à C₂₀ contenant un halogène ou un groupe contenant du silicium ;
R⁴ à R⁹ sont indépendamment un atome d'hydrogène, un atome d'halogène, un groupe hydrocarbure en C₁ à C₂₀, un groupe hydrocarbure en C₁ à C₂₀ contenant un halogène, un groupe contenant du silicium ou un groupe contenant un hétéroatome et au moins l'un parmi R⁴ à R⁹ est un groupe autre qu'un atome d'hydrogène et R⁴ à R⁹ sont identiques ou différents les uns des autres, et deux groupes adjacents de ceux-ci sont éventuellement liés l'un à l'autre pour former un cycle ;
X¹ est un ligand capable de former une liaison σ où quand plusieurs groupes X¹ sont présents, ces groupes X¹ peuvent être identiques ou différents les uns des autres, et peuvent être réticulés avec l'autre groupe X¹ ou groupe Y¹ ;
Y¹ est une base de Lewis et quand plusieurs groupes Y¹ sont présents, ces groupes Y¹ sont identiques ou différents les uns des autres, et sont éventuellement réticulés avec l'autre groupe Y¹ ou groupe X¹ ;
q est un entier de 1 à 5 calculé d'après la formule :
[(valence de M) - 2] ; et
r est un entier de 0 à 3, et
(B) un composé organoboré ;
où le polymère à base de propylène possède une viscosité intrinsèque de 0,01 à 0,4 dl/g tel que mesuré dans un solvant tétraline à 135°C.

2. Procédé selon la revendication 1, dans lequel le polymère à base de propylène possède une viscosité intrinsèque de 0,1 à 0,4 dl/g tel que mesuré dans un solvant tétraline à 135° C.

3. Procédé de production d'un polymère à base de propylène à grande aptitude à l'écoulement, comprenant :
la copolymérisation du propylène avec l'éthylène et/ou une α-oléfine en C₄ à C₂₀ en présence d'un catalyseur de polymérisation comprenant :
(A) un composé de métal de transition contenant des dérivés biscyclopentadiényle de type à double réticulation représenté par la formule générale suivante (II) 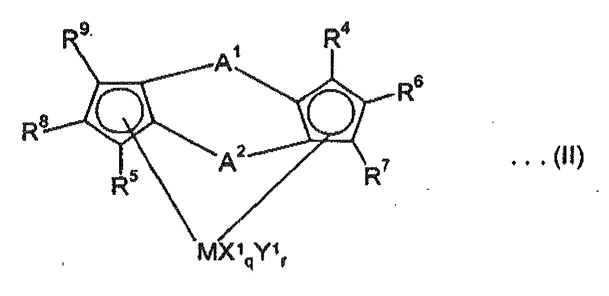 où M est un élément métallique appartenant aux groupes 3 à 10 ou des lanthanides du tableau périodique ;
A¹ et A² sont des groupes de réticulation divalents capables de lier les deux ligands l'un à l'autre et qui sont identiques ou différents l'un de l'autre, et sont indépendamment un groupe hydrocarbure en C₁ à C₂₀, un groupe hydrocarbure en C₁ à C₂₀ contenant un halogène ou un groupe contenant du silicium ;
R⁴ à R⁹ sont indépendamment un atome d'hydrogène, un atome d'halogène, un groupe hydrocarbure en C₁ à C₂₀, un groupe hydrocarbure en C₁ à C₂₀ contenant un halogène, un groupe contenant du silicium ou un groupe contenant un hétéroatome et au moins l'un parmi R⁴ à R⁹ est un groupe autre qu'un atome d'hydrogène et R⁴ à R⁹ sont identiques ou différents les uns des autres, et deux groupes adjacents de ceux-ci sont éventuellement liés l'un à l'autre pour former un cycle ;
X¹ est un ligand capable de former une liaison σ où quand plusieurs groupes X¹ sont présents, ces groupes X¹ peuvent être identiques ou différents les uns des autres, et peuvent être réticulés avec l'autre groupe X¹ ou groupe Y¹ ;
Y¹ est une base de Lewis et quand plusieurs groupes Y¹ sont présents, ces groupes Y¹ sont identiques ou différents les uns des autres, et sont éventuellement réticulés avec l'autre groupe Y¹ ou groupe X¹ ;
q est un entier de 1 à 5 calculé d'après la formule :
[(valence de M) - 2] ; et
r est un entier de 0 à 3, et
(B) un composé organoboré ;
où le polymère à base de propylène possède une viscosité intrinsèque de 0,01 à 0,4 dl/g tel que mesuré dans un solvant tétraline à 135°C.

4. Procédé selon la revendication 3, dans lequel le polymère à base de propylène possède une viscosité intrinsèque de 0,1 à 0,4 dl/g tel que mesuré dans un solvant tétraline à 135° C.

5. Procédé de préparation d'un polymère à base de propylène selon l'une quelconque des revendications précédentes, dans lequel R⁴ et R⁵ sont des groupes contenant un hétéroatome choisi parmi le groupe consistant en oxygène, halogène et silicium.
